(19) Europäisches Patentamt

European Patent Office

Office européen des brevets

(11) Publication number: **0 349 690 B1**

(12) **EUROPEAN PATENT SPECIFICATION**

(45) Date of publication of patent specification: 22.09.93   (51) Int. Cl.⁵: **B65G 53/04**, B65G 53/22, B65G 53/28

(21) Application number: **88306189.7**

(22) Date of filing: **07.07.88**

(54) **Transporting powdered or granular materials by pneumatic force.**

(43) Date of publication of application:
**10.01.90 Bulletin  90/02**

(45) Publication of the grant of the patent:
**22.09.93 Bulletin  93/38**

(84) Designated Contracting States:
**AT CH DE FR GB IT LI**

(56) References cited:
**DE-A- 23 438**
**GB-A- 1 412 619**
**US-A- 2 192 287**
**US-A- 2 673 127**
**US-A- 3 149 884**

(73) Proprietor: **MATSUI MANUFACTURING CO.,
LTD.
5-26, Tanimachi 6-chome, Chuo-ku
Osaka-shi Osaka-fu 542(JP)**

(72) Inventor: **Kimura, Harumoto
2-19-10, Makinosaka
Hirakata-shi Osaka-fu, 573(JP)**
Inventor: **Tanigawa, Toyoaki
5-27 Nariainakanomachi
Takatsuki-shi Osaka-fu, 569(JP)**

(74) Representative: **Bond, Bentley George et al
Haseltine Lake & Co. 28 Southampton Build-
ings Chancery Lane
London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

## Description

The present invention is used for a pneumatic transporting apparatus for transporting powdered or granular materials, various kinds of raw materials for plastic, medicine, processed foods and the like, from a source from which the materials are supplied, through a transport pipe to a destination, utilizing pneumatic force of transporting gas, such as air, argon, nitrogen gas and the like, which is sucked in or pressurized to be fed, and, more specifically, relates to an apparatus for transporting the powdered or granular materials by the pneumatic force with the transport pipe of smaller diameter used in such a manner that the powdered or granular materials do not lodge (are not fixed) in the transport pipe.

In this kind of apparatus for transporting the powdered or granular materials by the pneumatic force, it is preferable that the powdered or granular materials, an article to be carried, such as a plastic pellet and the like, can be transported from an original transporting place to a transporting destination such that the powdered or granular materials do not lodge in the transport pipe. In order to attain this requirement, conventionally, various kinds of improvements in each of parts including the original transporting place, the transport pipe, and the transporting destination have been proposed. For example, trial ideas are that the original transporting place has a lower part of a storage vessel equipped with a feeder such as a rotary feeder and the like, compressed air is fed into a multiplicity of small holes being longitudinally made in a air pipe, smaller in diameter by fraction of the transport pipe, which is inserted into the transport pipe, and a cyclone separator is provided on the transporting destination.

Generally, the technical common sense in the industrial circle concerned is that a bore of the transport pipe ought to be adequate enough to give no rise to an apprehension of clogging the inside of the transport pipe with the powdered or granular materials, the article to be carried, such as a synthetic-resin-made pellet, i.e. it should be over 7 times as long as max. length of particle of the powdered or granular materials.

As the transport pipe for transporting the ordinary synthetic-resin-made pellet by pneumatic force, conventionally, the transport pipe of larger diameter whose bore is approximately over 25 mm has been used. The fact is that even in the cases of grain whose max. length of the particle of the powdered or granular materials is smaller than the afore-mentioned length and powder which is smaller than grain, the transport pipe of larger diameter whose bore is approximately over 25 mm is used.

In order to give no rise to the clogging of the transport pipe with the powdered or granular materials, as mentioned above, the bore of the transport pipe becomes unavoidably larger, the recognition widely spread in the industrial circle concerned having been that the transport pipe of smaller diameter is not suitable for a practical application, because the clogging of the transport pipe with the powdered or granular materials takes place.

In light of the recent inclination to the small lot of plural productions, since a transportation of the powdered or granular materials with the transport pipe of larger diameter is led to an over-enlargement of the bore (sectional area) of the transport pipe in comparison with quantity of the powdered or granular materials to be transported, in addition to a larger space for piping, the piping work becomes complicated so that in terms of the facilities as well as the costs, the uneconomical situation is incurred.

In contrast with that, it is appreciated that the transport pipe of smaller diameter enables many shortcomings possessed by the afore-mentioned larger diameter to be solved. In this connection, the present inventors, as a result of their repeated research and experiment aiming at a realization of the transportation of the powdered or granular materials with the transport pipe of smaller diameter used, discover that even if the bore of the transport pipe, made of the synthetic resin or metal, is 2-6 times as long as max. length of the particle of the powdered and granular materials, it is possible to transport the powdered and granular materials in such a manner that they do not lodge in the transport pipe. Nevertheless, the following questions are finally left unsolved : Namely, since a sectional area of flowing the powdered or granular materials is markedly narrowed at an inlet of the transport pipe, i.e. in vicinity of an outlet of the storage vessel containing the powdered or granular materials, the original transporting place is clogged with the powdered or granular materials. Further subjects to be newly solved are that the outlet of the transport pipe, i.e. the transporting destination wherein the powdered or granular materials are collected such that they are separated from transporting gas, is also clogged with them and that a separation efficiency between the transporting gas or dust and the powdered or granular materials is lowered.

As a result of the repeated study and development, by the present inventors, aiming at a solution of such subjects, as mentioned apparently in the under-mentioned description, they succeed in developing means of solving the subjects.

In order to transport the powdered or granular materials by the pneumatic force with the afore-mentioned transport pipe of smaller diameter used, if appliances which have been conventionally used at the original transporting place and the transporting destination are adopted, they are clogged with the powdered or granular materials, and the appliances are costly, being voluminous so that, after all, the aforementioned arrangement, which is different from the present inventor's pursuable product, cannot avoid an occurrence of clogging with the powdered or granular materials, miniaturize and simplify its construction, and provide the same at low costs.

Namely, as for the original transporting place, as mentioned above, the known idea is that the rotary feeder is provided on the lower part of the storage vessel. The rotary feeder employs a type in which a rotor having several units of blades around its rotational shaft is rotated in a case, and the powdered or granular materials being received among the blades after falling from the storage vessel located at the upper position are quantitatively discharged from an exhaust port located at the lower position. Since such a rotary feeder is required to perform such antithetical actions as a transfer of the powdered or granular materials and blocking of the transporting gas at the same time, a critically problematic point lies in a gap between the rotor and the casing. From that view, the aforementioned rotary feeder has a structural defect that if the gap becomes smaller, although the air-tightness is improved, an increase in wear of the powdered or granular materials, caused by their engagement with the narrow gap, and a rotational resistance against the motion of the rotor is unavoidable. For this reason, also in the case of connecting this kind of rotary feeder to the transport pipe of smaller diameter, the same defect takes place.

As for the transporting destination, as mentioned above, a trial idea is that the cyclone separator is provided on an exhaust end of the transport pipe. In that case, the defect of cyclone separator which causes free vortex to give centrifugal force to the particle in air current, thereby collecting the powdered or granular materials from the gas in a separated manner, is that the size of particle which can be collected is over several $\mu$ms and that such a separator is voluminous.

GB-A-1412619 discloses an apparatus for transporting materials by pneumatic force with a transport pipe. The apparatus comprises a storage vessel; a transport pipe of smaller diameter having an inside diameter three times or more the maximum length of the particle size of the materials to be transported, which communicates with a material outlet of the storage vessel; a pneumatic power source for transporting the materials in the storage vessel to a destination (reaction vessel) by way of the transport pipe; and material floating means for transporting the materials by pneumatic force from the inside of the transport pipe to a destination in such a manner that the materials may not lodge in the transport pipe, while the materials are caused to be kept floating at an inlet of the transport pipe or in the vicinity of the inlet thereof.

The material floating means of GB-A-1,412,619 is formed by connecting one end of the transport pipe to the lower end of the feeder main body having a pipe-shaped material storing chamber, and connecting a gas guide pipe orthogonally slightly above the lower part of the side wall of the material storing chamber, and is designed to supply the transport gas from the orthogonal direction to the intermediate part of the materials flowing in the vertical direction. Therefore, in the material storing chamber located beneath the gas guide pipe, there is a dead space which the injected gas does not reach, and the materials may be stagnant in this dead space.

Also, at the outlet end of the transport pipe, only the reaction vessel is connected, and the collector is not connected, and therefore the materials and the transport gas cannot be separated and collected.

US-A-2673127 discloses a pneumatic transporting apparatus comprising a storage vessel; a transporting apparatus comprising a storage vessel; a transport pipe communicating with a material outlet of the storage vessel; a pneumatic source for transporting the material in the storage vessel to a destination by way of the transport pipe; a gas feed pipe for floating materials as the floating means for pneumatically transporting to the destination from within the transport duct while floating the materials, which is connected to the inlet of the transport pipe; and a collector for separating and collecting the materials and the transporting gas connected to the outlet end of the transport pipe, while the pneumatic source is connected to the gas feed pipe.

The material floating means in US-A-2673127 has one end of the pipe or duct connected to the gas feed pipe, in which the compressive gas in the pneumatic source is sent into the pipe or duct through the gas feed pipe, and the materials in the storage vessel are sucked from the material inlet formed in the pipe or duct and transported, and are conveyed into the collector through the transport pipe. Therefore, it is intended to pneumatically transport the materials in the longitudinal direction of the pipe or duct, and therefore the materials may lodge in this pneumatic transport portion or in the transport pipe at the downstream side.

The primary object of the present invention is to provide an apparatus for transporting powdered or granular materials by pneumatic force, using a transport pipe of smaller diameter having an inside diameter 2-6 times as long as max. length of particle of the powdered or granular materials, such that the powdered or granular materials do not lodge in an inlet or transport pipe, where a sectional area of flowing the powdered or granular materials becomes considerably narrow, or in vicinity of the inlet thereof.

For this reason, a further object of the present invention is to provide the apparatus for transporting the powdered or granular materials by the pneumatic force which makes a piping space of the transporting pipe smaller, simplifies and facilitates the piping work, and is economical in terms of facilities and expenditure.

A still further object of the present invention is to provide a device located at the original transporting place and a device located at the transporting destination, simple in structure, miniaturized, and costless, which does not cause the powdered or granular materials to lodge in the original transporting place located at the inlet of the transport pipe of smaller diameter and the transporting destination located at the outlet thereof.

Other objects, the characteristics, and the advantageousness of the present invention will be apparent from the following description:

In order to attain the afore-mentioned objects, the present invention is to arrange the powdered or granular materials to be transported through the transport pipe, while they are kept to float in the inlet of the transport pipe or in vicinity of the inlet thereof, using the transport pipe of smaller diameter having the inside diameter 2-6 times as long as max. length of the particle of the powdered or granular materials. In the present invention, a meaning of "floating" is widely defined to read a motion being made from some part to other part without any stop at a fixed place such as an agitation, a fluidization, a wave motion.

As a specified means of floating the powdered or granular materials, a first option may be that at the same time when an intermittent jet of the gas at the inlet of the transport pipe of smaller diameter or in vicinity of the outlet thereof causes the powdered or granular materials to be moved, an obstruction of flow of the powdered or granular materials, made once at the jet of the gas, adapts them to flow intermittently, a second option may be that the air is continuously supplied or that the intermittent supply and the continuous supply of the gas are employed at the same time, a third option may be that such an actuating unit as a piston rod which is provided in vicinity of the transport pipe of smaller diameter in such a manner that the actuating unit may freely make an advance/retreat in the transport pipe, causes the powdered or granular materials to be moved, or that the afore-mentioned supply of the gas and the action of the actuating unit are employed at the same time, and, after all, the means of floating the powdered or granular materials is optional. The best mode is that the powdered or granular materials flow intermittently into the transport pipe, and an accepted alternative is a continuous flowing of them.

As the pneumatic transporting apparatus in a practical use, the present invention comprises a storage vessel, the transport pipe of smaller diameter, having the inside diameter 2-6 times as long as max. length of the particle of the powdered or granular materials to be transported, which communicates with a material outlet of the storage vessel, the source of pneumatic force for transporting the powdered or granular materials in the storage vessel through the transport pipe to the destination such as a blower, a compressor, a vacuum pump and the like, and a powdered or granular floating means of transporting the powdered or granular materials by the pneumatic force through the transport pipe to the destination in such a manner that they do not lodge in the transport pipe, while they are caused to be kept to float at the inlet of the transport pipe or in vicinity of the inlet thereof, and a collector for separating and collecting the powdered or granular materials and transporting gas from each other, disposed at the outlet end of the transport pipe.

If the transport pipe is made of the same raw materials as that for the powdered or granular materials, a resulting advantageousness is that even if an inner wall of the transport pipe by itself is worn and broken by the powdered or granular materials, it does not become foreign matter, being able to be used. The optional scope of raw materials for forming the transport pipe, of course, includes metal, ultra-high-molecular polyethylene, plastic, ceramic and the like.

The powdered or granular materials floating means comprises the material housing chamber being formed into a thin-layer-shaped space so that it is filled with the powdered or granular materials in a thin-layer-shaped manner, the feeder proper being connected to the storage vessel, the transport pipe being connected to communicate with one side of the material outlet of the material housing chamber, and the nozzle being connected to communicate with another side thereof such that it is opposited to the transport pipe.

In that case, a preferable mode of the feeders has the inlet of the material housing chamber inclined to the outlet thereof. An adjusting member capable of adjusting a flow of the material is preferably provided in vicinity of material outlet of the material housing chamber of the feeder proper. It is also accepted that the adjusting member is fixed or provided movably in vicinity of the material outlet of the material housing chamber. The further function of the adjusting member includes narrowing of the inner wall of the transport pipe of smaller diameter, while throttling the same.

It is accepted that the collector is connected to the outlet end of the transport pipe, a suction port of a vacuum pump acting as the source of pneumatic force is connected to an exhaust port of the collector, a port of supplying the gas for floating the powdered or granular materials, acting as one of powdered or granular floating means, is formed in vicinity of the inlet of the transport pipe, and the exhaust port of the vacuum pump is connected to the port of supplying the gas.

An arrangement is also accepted in which the collector has an electrode located at least partial part of a wall on the housing chamber side of the collector, the electrode, opposite to the former electrode, is provided in the housing chamber in the wall on the housing chamber side, a pair of or a plurality units of electrodes, different from each other and opposite to each other, are formed to be overlaid upon each other in the wall on the housing chamber side with an insulating part interposed between them, and a change in electrostatic capacity between these electrodes, caused by filling with the powdered or granular materials, is detected by a detector being connected to the electrodes, thereby detecting a level of the powdered or granular materials in the housing chamber of the collector.

An arrangement is further accepted in which the collector comprises the collector proper for collecting the powdered or granular materials, and a separator for separating the powdered or granular materials and the transporting gas from each other, the separator is disposed on an upper-stream side with respect to the collector proper, a gas conducting passage for taking out the transporting gas and dust is provided in the transport pipe, and the exhaust hole for discharging the separated gas and dust to the outside of the separator is formed in the outer wall of the separator.

It is accepted that the exhaust hole being formed in the separator, and an alternative optionally lies in forming the outer wall of the separator out of permeable material through which the transporting gas and the dust can pass.

With regard to the bore of the powdered or granular passage of the transport pipe being inserted into the separator, one on the lower-stream is preferably identical or slightly larger to/than another on the upper-stream.

The gas conducting passage is constituted by a slit made between the lower end margin of the transport pipe being inserted into the separator and the upper opening margin of the material outlet of the separator, and the slit can be formed such that a vertical motion of the transport pipe enables a flow sectional area of the slit to be changed. A notch being formed in the transport pipe acts optionally as the gas conducting passage, and a description of its modified example will be made in the under-mentioned embodiment.

It meets the requirement that, as mentioned above, the collector proper and the separator being disposed on the upper-stream side thereof constitute the collector, the gas conducting passage is provided in the transport pipe being inserted into the separator, and an exhaust hole mounting part is formed in the outer wall of the separator, while the pipe of supplying the gas for cleaning the gas conducting passage is connected to the exhaust pipe which is connected to the exhaust hole mounting hole of the separator.

The inside of the collector is cleaned by the gas from the gas supplying pipe which is provided on the collector proper, and the exhaust gas can be discharged from the exhaust hole being provided in the separator or the collector proper to the outside. In that case, the gas supplying pipe is provided on the upper part and/or the lower part of the collector proper, and an accepted idea is that the gas being supplied from the upper gas supplying pipe to the lower-stream side is adapted to become ascending current so that it is discharged to the exhaust hole, while the gas being supplied from the lower gas supplying pipe to the upper-stream side is discharged to the exhaust hole.

Thus, as the powdered or granular floating means for transporting the powdered or granular materials by the pneumatic force with the transport pipe of smaller diameter used in such a manner the powdered or granular materials do not lodge in the transport pipe, the gas such as the compressed gas is jetted at the inlet of the transport pipe or in the vicinity of the inlet thereof.

As the collector for transporting the powdered or granular materials by the pneumatic force with the transport pipe of smaller diameter used in such a manner that the powdered or granular materials do not lodge in the transport pipe may employ the afore-mentioned construction.

Reference will now be made, by way of example, to the drawings in which :

Fig. 1 is a partial longitudinal sectional view of the original transporting place of the 1st embodiment according to the present invention;

Fig. 2 is a reduced plan view of the feeder in Fig. 1;

Fig. 3 is an outline of system diagram of an example to which Fig. 1 is applied;

Fig. 4 is a longitudinal sectional view of the feeder of the 2nd embodiment according to the present invention;

Fig. 5 is a longitudinal sectional view of the feeder of the 3rd embodiment according to the present invention;

Fig 6 is a partial longitudinal sectional view of an example to which Fig. 5 is applied;

Fig. 7 is a longitudinal sectional view of the collector of the 4th embodiment according to the present invention;

Fig. 8 is an outline of system diagram of an example to which the collector of Fig. 7 is applied;

Fig. 9 is an outline of system diagram of other example to which the collector of Fig. 7 is applied;

Fig. 10 is a longitudinal sectional view of the collector of the 5th embodiment according to the present invention;

Fig. 11 is a longitudinal sectional view of the collector of the 6th embodiment according to the present invention;

Fig. 12 is a longitudinal sectional view of the collector of the 7th embodiment according to the present invention;

Fig. 13 is a longitudinal sectional view of the collector of the 8th embodiment according to the present invention;

Fig. 14 is a longitudinal sectional view of the separator whose exhaust hole is, as a modified example, illustrated to be formed out of the permeable material.

Figs. 15, 16, and 17 are longitudinal sectional views respectively of modified examples of the gas conducting passage;

Fig. 18 is a longitudinal sectional view of a state where the separator is connected by way of the transport pipe to the collector proper;

Fig. 19 is a longitudinal sectional view of the collector of the 9th embodiment according to the present invention;

Figs. 20 and 21 are longitudinal sectional views of modified example respectively of the transport pipe;

Fig. 22 is a longitudinal sectional view of the collector of the 10th embodiment according to the present invention;

Fig. 23 is a plan view of a state where the partition plate of Fig. 22 is taken off;

Fig. 24 is a longitudinal sectional view of the vicinity of the collector of the 11th embodiment according to the present invention;

Fig. 25 is a partial longitudinal sectional view taken from the right side face of Fig. 24;

Fig. 26 is a longitudinal sectional view of the collector of the 12th embodiment according to the present invention; and

Fig. 27 is a partial longitudinal sectional view taken from the right side face of Fig. 26.

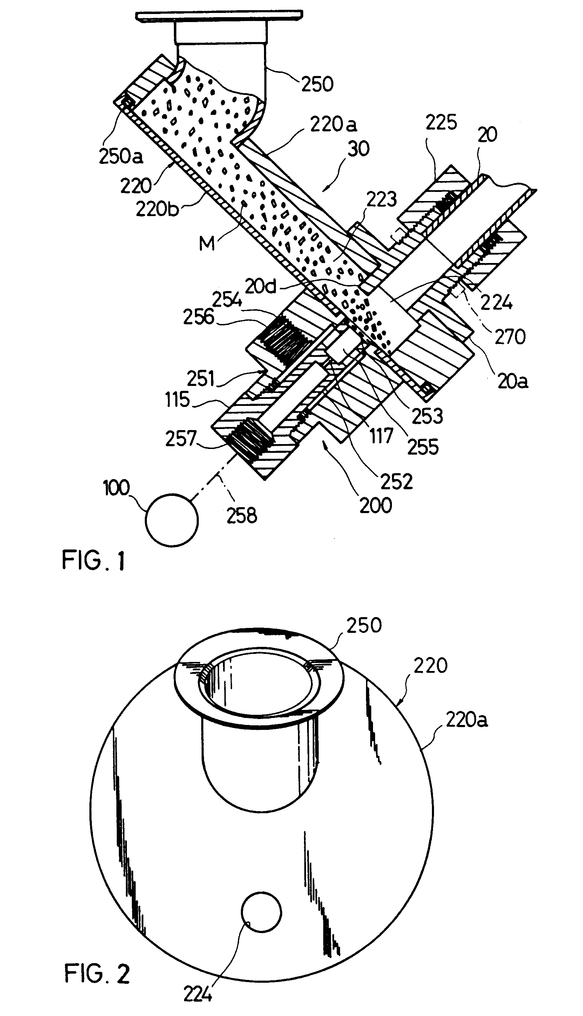

A description of the 1st embodiment according to the present invention as shown in Fig. 1 - Fig. 3 is made as follows:

The present apparatus for transporting the powdered or granular materials by the pneumatic force comprises mainly the storage vessel 1 storing the powdered or granular materials, the transport pipe 20 of smaller diameter having the inside diameter 2-6 times as long as max. length of the particle of the powdered or granular materials to be transported, the source of pneumatic force 100 for transporting the powdered or granular materials in the storage tank 1 through the transport pipe 20 to the destination, the powdered or granular floating means 200 of transporting the powdered granular materials by the pneumatic force, while they are kept to float at the inlet 21 of the transport pipe 20 or in vicinity of the inlet 21 thereof, the collector 300, provided at the outlet 22 of the transport pipe 20, for collecting the powdered or granular materials and the transporting gas in a separated manner.

A feeder 30 is connected to the exhaust hole 1a of the storage vessel 1 through a short pipe 250. Beneath the feeder 30, the inlet end of the transport pipe 20 of smaller diameter of flexible plastic material mentioned above, being of the same inside diameter as the transport short pipe 20 (for example, about 8mm inside diameter) is connected either directly or indirectly, through the transport short pipe 20a. The outlet 301 of the collector 300 to which the outlet 22 of the transport pipe 20 is connected communicates with the powdered or granular materials receiving part 303 of plastic forming machine or the like.

The inside diameter and material of the transport pipe 20 may be properly selected, but according to the experiment by the present inventors, the materials were transported stably without lodging in the materials transport route in the material feeder 30 even at the small diameter of inside diameter of 2 to 6 times the maximum length of particle size of the powdered or granular materials to be transported.

In the case of transport pipe 20 of small inside diameter, when it is composed in a tube form of plastics or other flexible (elastic) materials, the materials may be transported to the destination at a small air volume and at low wind velocity, and the piping space may be reduced, and many other advantages are brought about.

The pneumatic transporting apparatus of the 1st embodiment (Figs. 1-3), having the feeder 30, which works as the powdered or granular materials floating means 200 in the original transporting place, constituted by a board-shaped article of adequate form such as a circle and a quandrate, comprises the feeder proper 220 in which the material housing chamber 223, formed into the thin-layer-shaped space so that it may be filled with the material M in a thin-layer-shaped manner, is provided, the material outlet 224 being connected to communicate with the transport pipe 20 of smaller diameter on one side (front face side) of the lower part of the material housing chamber 223, and the nozzle 115 being connected to the source of pneumatic force such as the compressor and blower of another side (back face side) opposite to the material outlet 224.

The feeder proper 220 comprises the main body 220a in which the material housing chamber 223 is formed, and the lid 220b covering the main body 220a. 250a is a packing. Thus, the construction of the feeder proper 220 which is divided into the two parts including the main body 220a and the lid 220b brings advantageousness of cleaning easily the material housing chamber 223, being not always sole arrangement so that an integral construction may be also allowed.

The feeder proper 220 (i.e. the material housing chamber 223) is, as shown in Fig. 1, inclined and has the controlling member 20d capable of adjusting the flow of the material which is provided to project from a part of the short transport pipe 20a being equipped by way of the joint 225 with the transport pipe 20, faced to upper place of the material outlet 224 of the material housing chamber 223. Such a construction causes the material M, becoming loose, to be smoothly supplied to the material outlet 224 by the gas. It is desirable to prepare a multiplicity of controlling members 20d whose projecting lengths are different from one another, and if so, an adequate replacement of them can be made in response to the physical properties of the material M. If the material M is of some specified nature, no controlling member 20d is required to be provided. While the feeder proper 220 (material housing chamber 223) takes a perpedicular attitude, the nozzle 115, making an inclined angle to the feeder proper 220 (material housing chamber 223), can be mounted.

A method of supplying the material near to the storage vessel 1 from the upper-stream side of the material housing chamber 223 of the feeder proper 220 thereto is optional, and, in Fig. 1, the supply is illustrated to be made from the short pipe 250 being connected to the storage vessel 1.

The nozzle 115 is detachably threaded into the nozzle inserting hole 252 of the nozzle mounting portion 251 being fixed to the lid 220b of the feeder proper 220. On slightly outer side of the filter 253 being interposed between the top end side of the nozzle 115 and the lid 220b, the injection hole 117 is formed.

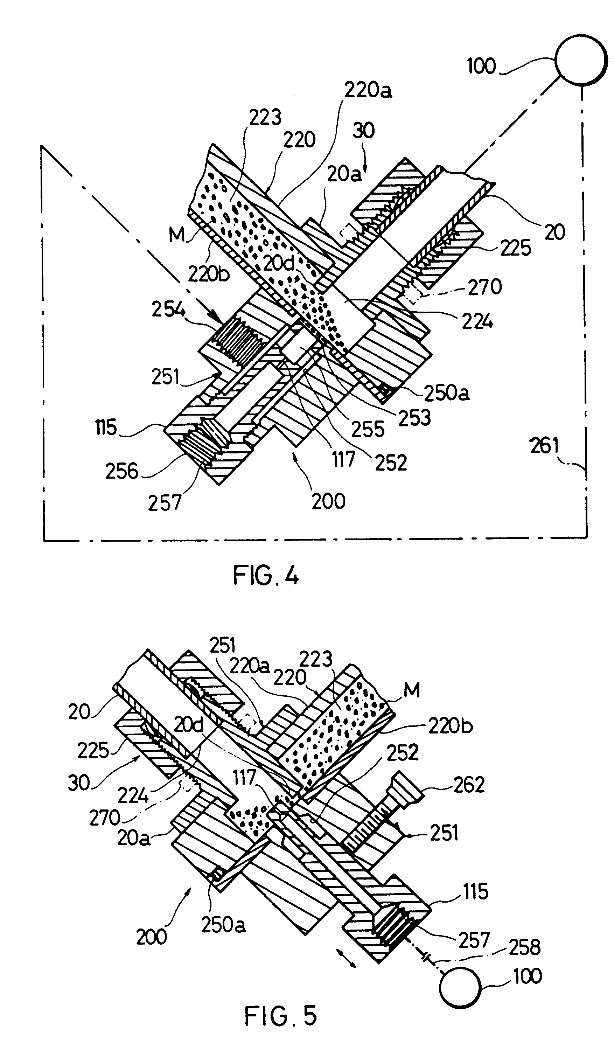

A secondary air introducing port 254 is formed in the nozzle mounting portion 251 in a direction of crossing the nozzle inserting hole 252, and the gas being introduced from the secondary air introducing port 254 is supplied by way of the gas guiding passage 255 being formed in the top end of the nozzle 115 into the material housing chamber 223. For this reason, when pressure-transporting the material by the pressure-fed type source of pneumatic force, a closing of the secondary air introducing port 254 with the cock 256 or a valve preventing a leakage of the compressed gas from taking place, the compressed gas from the source of pneumatic force 100 is fed in from the gas introducing port 257 of the nozzle 115 by way of the injection hole 117 of the nozzle and the filter 253 into the material housing chamber 223. When suction-transporting the material by the suction type source of pneumatic force 100, as shown in Fig. 4 of the 2nd embodiment, the necessary arrangement is that after closing the gas introducing hole 257 of the nozzle 115 by the cock 256 or the valve, the secondary air is introduced from the secondary air introducing port 254, and the suction type source of pneumatic force 100 such as the vacuum pump is connected to the side of the transport pipe 20.

Thus, a contrivance of this embodiment lies in possibilities of executing the transportation not only under the pressure-feed system but under the suction system, and if the secondary air introducing port 254 is not primarily formed in the nozzle mounting portion 251, of course, the suction type transportation becomes impossible. A further possibility is that if the nozzle 115, the gas conduit 258 and the pressure-feed type source of pneumatic force 100 are taken away, only the suction transportation can be executed.

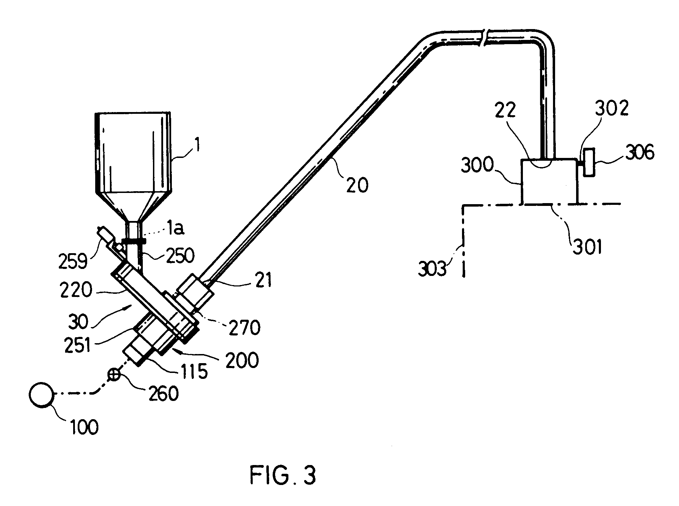

Fig. 3 illustrates one example of applying the material feeder 30 for the pneumatic transporting according to the 1st embodiment to the pressure-feed type pneumatic transporting apparatus comprising the storage vessel 1, the pressure-feed type source of pneumatic force 100 such as the compressor, and the transport pipe 20. This material feeder 30 for the pneumatic transporting is mounted to the apparatus by connecting the short pipe 250 to the exhaust port 1a of the storage vessel 1. The receiving part 303 of the powdered or granular materials such as the synthetic resin molding machine and the like is connected by way of the collector 300 to the terminal end side of the transport pipe 20. 259 is a damper, which may be allowed not to be provided. 260 is the selector valve, and an exhaust filter 306 is connected to the collector 300.

The material feeder 30 for the pneumatic transporting can be applied to other construction excluding such an one as shown in Fig. 3, also applied, of course, to other optional pressure-feed type pneumatic transporting apparatus, and further applied to the suction type pneumatic transporting apparatus.

The 2nd embodiment as shown in Fig. 4 is the material feeder 30 which is applied to the suction type pneumatic transporting apparatus, and suction-transports the material M in the material housing chamber 223 from the material outlet 224 by means of the gas suction force from the suction type source of pneumatic force being connected to the terminal end side of the transport pipe. In that case, the gas introducing hole 257 being closed by the cock 256 or the valve, and only the secondary air introducing port 254 being opened, and introduction of the outer air from the secondary air introducing port 254 or a connection between the discharge side of the suction type source of pneumatic force 100 such as the blower or the vacuum pump and the secondary air introducing port 254, made by way of a circulating pipe as shown by an oblique line, causes the discharge gas of the source of pneumatic force 100 to be supplied from the secondary air introducing port 254 or dehumidified gas and hot wind to be supplied from the secondary air introducing port 254, thereby controlling a suction gas quantity of the suction type source of pneumatic force 100 so that a clogging of the material housing chamber 223 with the material may be solved.

An outer air supply to the secondary air introducing port 254 is continuously or intermittently performed at the adequate time when the suction transforming is executed.

It is possible that, in addition to the introduction of the suction gas, the outer air, or the hot wind into the secondary air introducing port 254, the introduction of the compressed gas of the pressure-feed source of pneumatic force 100 from the gas introducing hole 257 loosens or prevents a clogging of the material housing chamber 223 with the material.

Fig. 5 of the 3rd embodiment illustrates the material feeder 30 being applied to the pressure-feed type pneumatic transporting apparatus. This embodiment comprises an arrangement in which the nozzle 115 goes out and in from/into the material housing chamber 223, being freely able to make an advance/retreat, thereby changing a position at which the injection hole 117 of the nozzle 115 faces the material housing chamber 223 (material outlet 224) so that it becomes possible that a ratio of mixing between the material M and the gas quantity in vicinity of the material outlet 224 of the material housing chamber 223 is adjusted, a prevention of the clogging with the material being tried to be attained. 262 is a positioning screw of the nozzle. Other construction is approximately identical to that of Fig. 1.

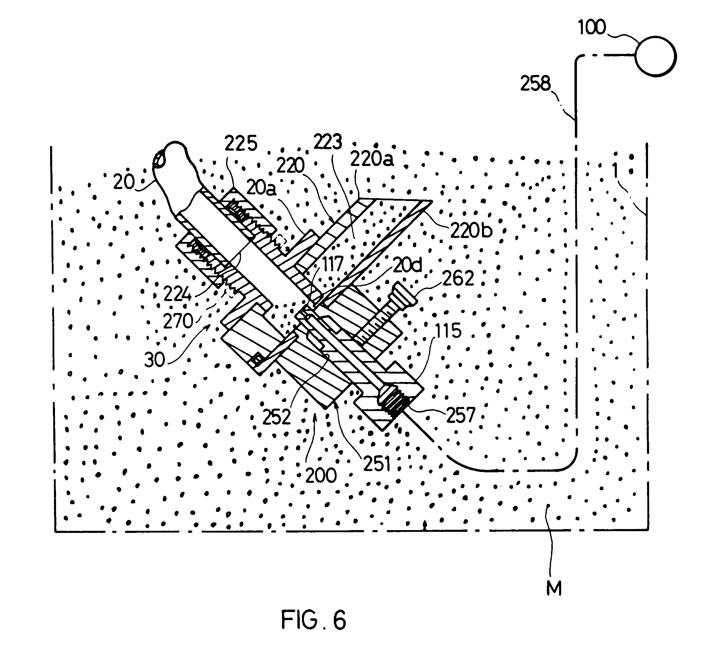

Fig. 6 illustrates the construction in which the material is supplied from the material inlet of the feeder proper 220, after the material feeder 30 is inserted into the storage vessel 1, and the material is pressure- or suction-transported to the transport pipe 20 with the pressure-feed or suction type source of pneumatic force 100 used.

The shape of the feeder proper 220 is not always limited to such a disc-shape as shown in the embodiment, and only if its material housing chamber 223 is of the thin-layer-shaped space, it may be allowed to take board-shaped article such as a polygon or an ellipse, other shapes being also optional.

The material housing chamber 223 is used as a metering measure at the same time, and a known level detector (not shown) for detecting a filling quantity of the material can be provided in the material housing chamber 223.

A plurality of the material outlets 224 are formed, and the nozzle 115...corresponding to the material outlets 224... respectively are provided at the positions opposite to one another, whereby not only the pressure-transporting of the material toward a plurality of destinations but also the suction-transporting thereof toward a plurality of destinations become possible.

270 of Figs. 1, 3, 4, 5, and 6 is a gas supply pipe which supplies the discharge air of the compressor or the vacuum pump which is used for transporting smoothly the material residual in the transport 20 upon completion of transporting the material in the original transporting place.

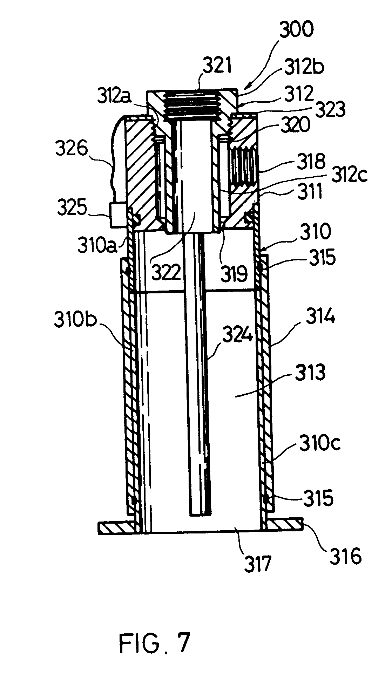

Next, a description of the embodiments of the collector, located at the transporting destination, which takes out the powdered or granular materials, while separating the powdered or granular materials and the transporting gas from each other, with the transport pipe of smaller diameter used such that the powdered or granular materials do not lodge therein is made in conjunction with Figs. 7-12 as follows:

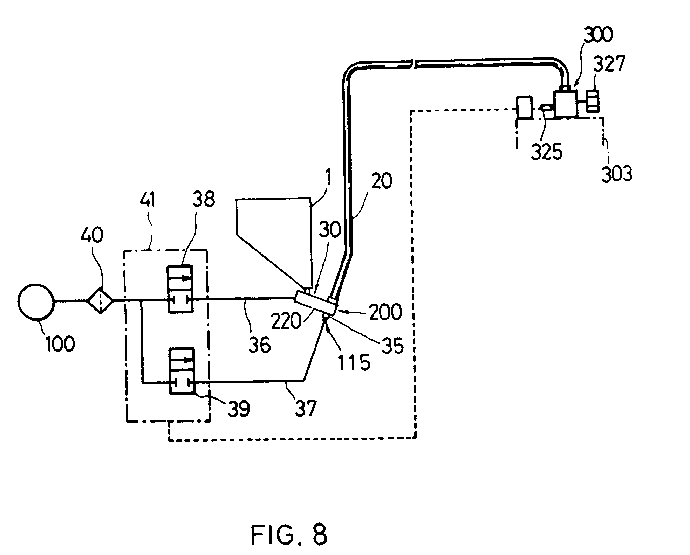

A description of Fig. 7 illustrating the 4th embodiment and Fig. 8 illustrating one example to which the embodiment is applied is made as follows:

As shown in Fig. 7, the collector 300 being connected to the outlet of the transport pipe comprises the side wall of the housing chamber 310, the insulated outer lid 311 which is provided on the upper part of the side wall of the housing chamber 310, and the conductive inner lid 312 which is detachably provided in the outer lid 311.

The side wall of the housing chamber 310 has the cylindrical housing chamber 313 for housing the powdered or granular materials formed, the upper cylinder 310a comprising the insulation is formed on the upper part of the housing chamber 313, the lower cylinder has the first electrode 310b comprising the conductive material formed, and an inspection hole 310c is formed on a part of the first electrode 310b. A cover 314 comprising the transparent material is vertically pressure-fitted by way of 0 rings 315 and 315 between the first electrode 310b and the upper cylinder 310a. Although the inspection hole 310c is not always indispensable, it is so convenient that if it is provided, the state of the powdered or granular materials in the collector 300 at the pneumatic transporting can be observed from the outside. The flange 316, which is fixed to the lower part of the side wall of the housing chamber 310 by welding, is mounted to the receiving part 303 of the synthetic resin molding machine by means of bolt-stop. 317 is the material outlet which is formed on the lower of the housing chamber 313.

The outer lid 311 has the exhaust hole 318 for the transporting gas and the exhaust passage 319 for the transporting gas formed on its side part and central part respectively, and a male screw 312a of the cylindrical inner lid 312 is detachably threaded into a female screw 320 which is formed in the upper opening of the exhaust passage 319. Thus, taking away of the inner lid 312 from the outer lid 311 enables dust adhering to the inside of the collector 300 to be easily eliminated.

The inner lid 312 comprises the cylinder of larger diameter 312b and the cylinder of smaller diameter 312c and the material inlet 321 and the material passage 322 communicating with the material inlet 321 are integrally formed on the cylinder of larger diameter 312b and the cylinder of smaller diameter 312c respectively. The male screw 312a is formed on the lower part of the cylinder of larger diameter 312b, and this male screw 312a and the female screw 320 are threaded to each other such that a doughnut-shaped terminal plate 323 is interposed between the cylinder of larger diameter 312b and the outer lid 311, thereby facilitating to take away their terminal plate 323 at the cleaning. Since the cylinder of smaller diameter 312c is constructed to has its top end located at the lower part of the exhaust passage 319 under the state of connecting the inner lid 312 to the outer lid 311, the powdered or granular materials which have been pneumatic-transported, the transporting gas, and the dust may be ensured to be separated from one another. Furthermore, throttling of the lower end part of the exhaust passage 319 causes the action of collecting in a separate manner to be executed favorably. The second electrode 324 is integrally provided in a perpendicular manner at the eccentric position, which avoids to be in line with the place just under the material passage 322, on the top end of the cylinder of smaller diameter 312c. If this second electrode 324 is adequately long enough to have its top end located to become in contact with the setup level (height) of the material (powdered or granular materials), when the collector 300 is assembled, it is satisfactory, and, like this embodiment, if the second electrode 324 is constructed to be long enough to reach the place near the lower end of the housing chamber 313, in addition to the setup level, a continuous detection of the level becomes possible.

The inner lid 312 is electrically connected in a conductive manner to a detecting part 325 by a lead wire 326, and the detecting part 325 is conductively connected also to the first electrode 310b in the side wall of housing chamber 310.

An appliance capable of detecting electrostatic capacity such as a Q meter is disposed in the detecting part 325. In Fig. 7 the detecting part 325 is provided on the side wall of the collector 300, and an alternative lies in separate provision of them with a long lead wire used.

In order that the transporting gas which is separated in the collector 300 is discharged to the outside of the system under the state of being clean, as shown in Fig. 8, the exhaust filter 327 is connected to the exhaust hole 318. In that case, a circulating circuit is also possible in which the exhaust filter 327 and the source of pneumatic force 100 as shown in Fig. 8 are connected by way of a piping to each other.

A description of one example to which the collector 300 of such a construction as shown in Fig. 7 is applied is made in conjunction with Fig. 8 27 in which the pneumatic transporting apparatus is provided as follows:

The source os pneumatic force 100 and the feeder 30 are connected to each other by the gas conduit 36, and the control box 41 in which the selector valve 38 such as a solenoid valve is packaged is provided in the adequate place of the gas conduit 36. The detecting part 325 is, as shown by a dotted line in Fig. 8, connected to the control box 41 and the control box 41 enables a collecting quantity of powdered or granular materials by the collector to be controlled. If the powdered or granular materials are supplied up to the setup level in the collector 300, for example, an action by both the electrodes 310b and 324 causes the detecting part 325 to detect the setup level and a signal to be sent to the control box 41, and the selector valve is closed, thereby stopping the transportation of the powdered or granular materials. In Fig. 8, in vicinity of the outlet of the feeder 30, the branch gas conduit 37 is disposed, the selector valve 39 such as the solenoid valve being also provided, and such a line allows the compressed gas to be supplied so that a clogging of the pipe with the powdered or granular materials at the stop of transportation may be prevented.

The shape of the feeder 30 is optional, and, in this embodiment, such a construction as shown in Fig. 1 is employed.

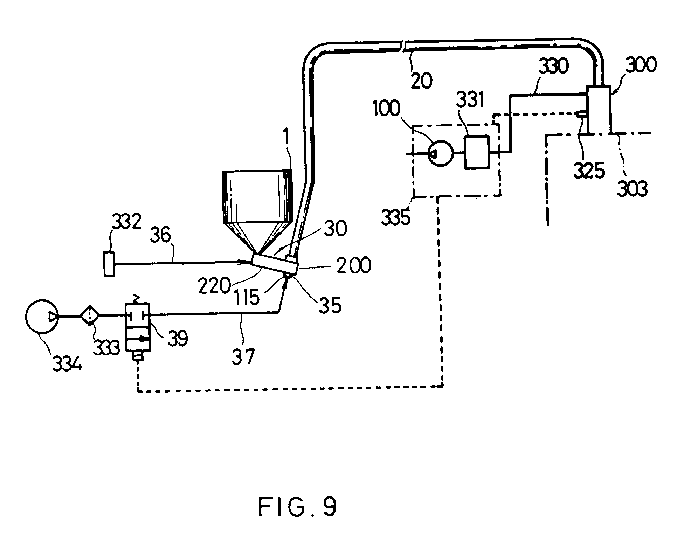

The system of Fig. 9, which illustrates other example to which the collector 300 of Fig. 7 is applied, is applied to the suction type pneumatic transporting apparatus.

Namely, similarly to Fig. 8, the collector 300 wherein a connection among the storage vessel 1, the feeder 30, the transport pipe 20 of smaller diameter, the collector 300, and the receiving part 303 of the powdered or granular materials is continuously made is equipped by way of the suction gas conduit 330 and the filter 331 with the suction type source of pneumatic force 100 such as the vacuum pump, and a suction action by the source of pneumatic force 100 causes the material in the storage vessel 1 to be suction-transported by way of the feeder 30, the transport pipe 20, and the collector 300 to the receiving part 303. The gas conduit 36 is connected by way of the nozzle 115 of the feeder 30 of such a construction as shown in Fig. 1 not such a source of pneumatic force as shown in Fig. 8 but the filter 332 is provided on the top end of the gas conduit 36, and the secondary gas such as outside air is taken in from the side of the filter 332 through the gas conduit 36, the nozzle 115 into the transport passage. The source of pneumatic force 334 such as the compressor is connected by way of the joint 35, the branch gas conduit 37, the selector valve 39, and the filter 333 to the 2nd gas conducting hole 34 of the feeder 30, and the compressed gas from the source of pneumatic force 334 is intermittently supplied by way of the filter 333, the joint 35, and the 2nd gas conducting hole 34 to the transport passage, whereby a clogging of the material transport passage of the feeder 30 and the transport pipe 20 with the material is solved. In the case of the material which does not lodge, of course, there is no necessity of supplying the compressed gas from the 2nd gas conducting hole 34, and in the aforementioned situation, the intermittent supply of the compressed gas is made, a continuous one is also possible.

A switch (not shown) being mounted to the control part 335 allows an ON/OFF operation of the source of pneumatic force 100, the detecting part 325, and the selector valve 39 to be performed.

A construction may be put into practice in which the exhaust port of the source of pneumatic force 100 is connected to the selector valve 39, and the source of pneumatic force 334 and the filter 333 are not mounted.

In this embodiment, the first electrode 310b constitutes partially the side wall of the housing chamber 310, and it may also occupy entirely the same, its length being optional.

As mentioned above, when the housing chamber 313 of the collector 300 is filled with the setup level of powdered or granular materials, a change in electrostatic capacity of the electrode 310b and 324 causes the detecting part 325 to detect the setup level, and a signal to be sent to the control part 335, thereby stopping the transportation of the powdered or granular materials.

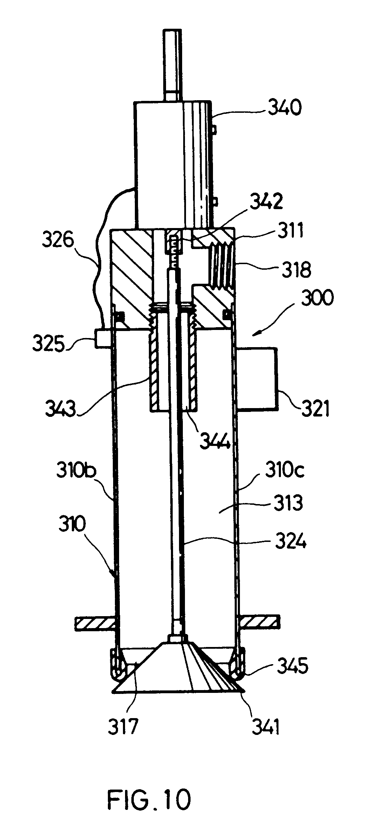

The 5th embodiment as shown in Fig. 10 is characterized in that while the second electrode 324 provided in the housing chamber 313 of the collector 300 is connected to a vertically moving member 340, such as a fluid pressure cylinder, which is provided in the outer lid 311 on the upper part of the side wall of housing chamber 310, a vertical movement of a valve unit 341, mounted to the top end of the second electrode 324, enables the material outlet 317 of the housing chamber 313 to be opened and closed, and the exhaust hole 318 is formed in the outer lid 311, the material inlet 321 being formed on the side wall of the housing chamber 310.

The lower end part of a rod 342 of the vertically moving member 340 and the upper end part of the second electrode 324 are connected to each other, a cylinder 343 into which the second electrode 324 is inserted is threaded to be provided perpendicularly on the lower part of the outer lid 311, and a contrivance lies in an arrangement in which a location of the lower end of the cylinder 343 under the material inlet 321 may prevent the second electrode 324 corresponding to the material inlet 321 from being given a damage by the material to be transported. The hollow part of the cylinder 343 communicates with the exhaust hole 318. 345 is the packing. The pressure-feed or suction type source of pneumatic force (not shown) is connected to the exhaust hole 318, and the transport pipe is connected to the material inlet 321. The same symbols of Fig. 10 as those of Fig. 7 stand for the same constructions.

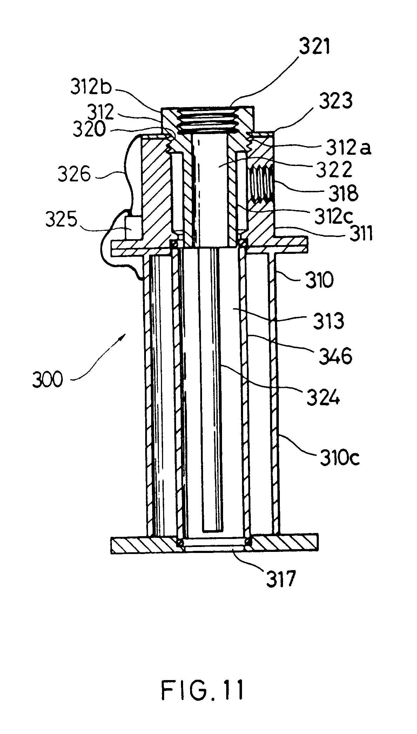

The 6th embodiment as shown in Fig. 11 has the housing chamber 313, and is characterized in a double inner and outer container structure in which the insulated inner cylinder 346, made of the transparent material such as glass, is packaged in the side wall of the housing chamber 310, its other construction being approximately identical to that of Fig. 7.

Although such a construction as shown in Fig. 7 in which the housing chamber 313 is formed directly in the side wall of the housing chamber 310, and the inspection hole 310c is formed in the side wall of the housing chamber 310 causes the inspection hole 310c to give rise to a difference in level on the inner side of the housing chamber 313, whereby the residual material inconveniently takes place, the construction of Fig. 11 can solve such an inconvenience. The same symbols of Fig. 11 as those of Fig. 7 stand for the same constructions.

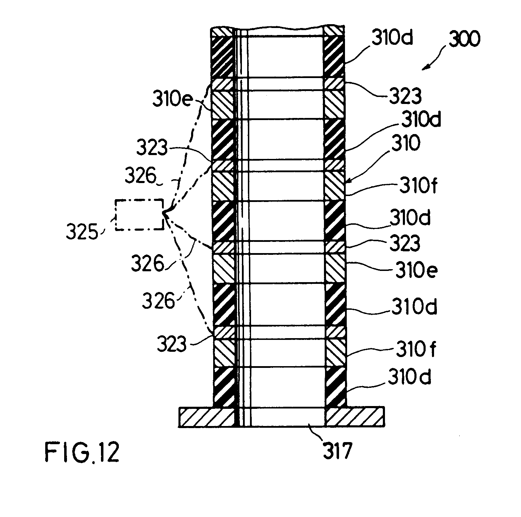

The 7th embodiment as shown in Fig. 12 comprises an arrangement in which the side wall of the housing chamber 310 has one unit or plurality units of electrodes 310e and 310f, differently opposite to one another, overlaid upon one another with the insulated parts 310d interposed between them, such a second electrode 324 as shown in Figs. 7, 10 and 11 being not provided, and the terminal plates 323 are put on the electrodes 310e and 310f, and, under such an arrangement, when the material with which the chamber is filled reaches a positional height of the desired insulated part 310d, a corresponding change in electrostatic capacity of the electrodes 310e and 310f which are vertically disposed to interpose the insulated part 310d there between causes the detecting part to detect the setup level. A proper change in the connecting system of the electrodes 310e and 310f with a power source and their positions may be allowed. The same symbols of Fig. 12 as those of Fig. 7 stand for the same constructions.

An arrangement in which there is only one unit of the insulated part 310d and both the electrodes 310e and 310f is accepted, and a possible alternative is, as shown in Fig. 12, that a plurality of units are overlaid upon one another.

Such a construction not only is very simple, because it is possible to form the positive and negative electrodes only on the side wall of the housing chamber 310, but also, in the case where the second electrode 324 is packaged in the chamber 313, solves a defect in which a change in physical properties of the material to be transported, such as its damage, takes place, when it hits against the second electrode 324.

The positional height of the electrodes 310b and 324 is optional. The shape and the structure of the collector 300 are not always limited to the illustrated ones and they may be changed to other modes, their proper change being allowed. For example, the material outlet 317 being not formed, the collector 300, being closed, can be formed into a vesseled shape.

If the outer lid 311 is detachably provided on the side wall of the housing chamber 310, it is convenient at the cleaning of the outer lid 311.

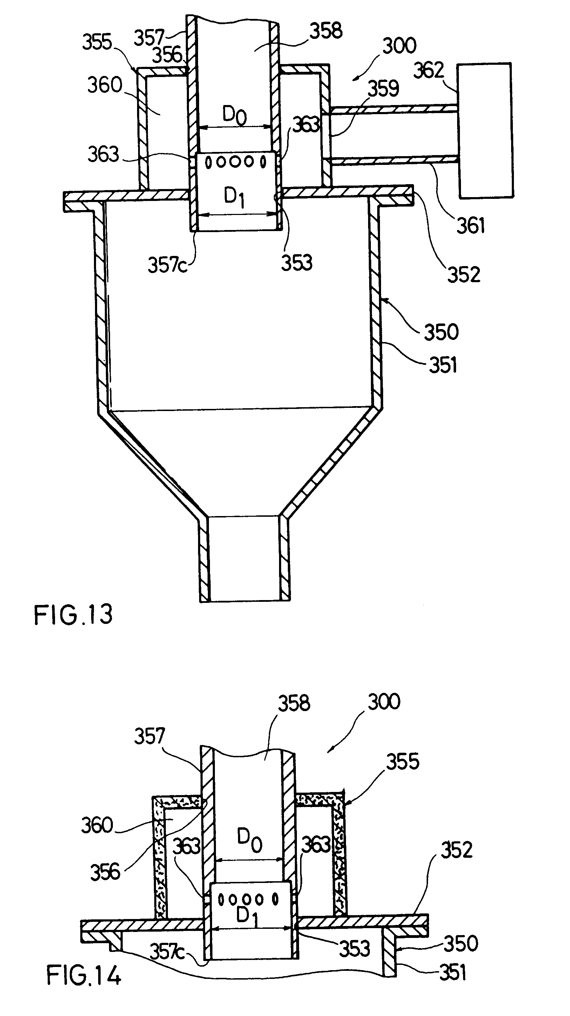

A description of the 8th embodiment as shown in Fig. 13 is made as follows:

The collector 300 comprises the collector proper 350 for collecting the powdered or granular materials and the separator 355, disposed on the upper-stream side of the collector proper 350, which separates the powdered or granular materials, the transporting gas, and the dust from one another.

The collector proper 350 consists of the main body 351 and the lid 352, and the opening 353 is formed on the lid 352. The separator 355, having a void chamber 360 located at its inside, takes a box-shape whose lower part is opened, and is put under the lid 352 of the separator proper 350. A transport pipe inserting hole 356 is formed in the center of the upper plate of the separator 355, the transport pipe 357 having the powdered or granular passage 358 through which the powdered or granular materials are transported together with the gas is inserted into the transport inserting hole 356, and the lower end part of the transport pipe 357, being inserted into the opening 353, faces the inside of the collector proper 350. The exhaust hole 359 for discharging the powdered or granular materials, and the separated transporting gas or dust to the outside of the separator 356 is formed in the adequate place of the outer wall of the separator 355, and the exhaust hole 359 is equipped by way of the piping with the known filter 362.

As shown in Fig. 14, it is possible that the exhaust hole 359 has the outer wall of the separator 355 formed out of the permeable material.

The gas conducting passage 363, comprising a multiplicity of small holes, which can face the inside of the void chamber 360 of the separator 355, is formed in the transport pipe 357. The gas conducting passage 363 causes the transporting gas or dust mixed in the powdered or granular materials which is supplied from the powdered or granular materials passage 358 of the transport pipe 357 to be taken out into the void chamber 360 of the separator 355, and such a gas or dust is discharged by way of the exhaust hole 359 to the outside of the system.

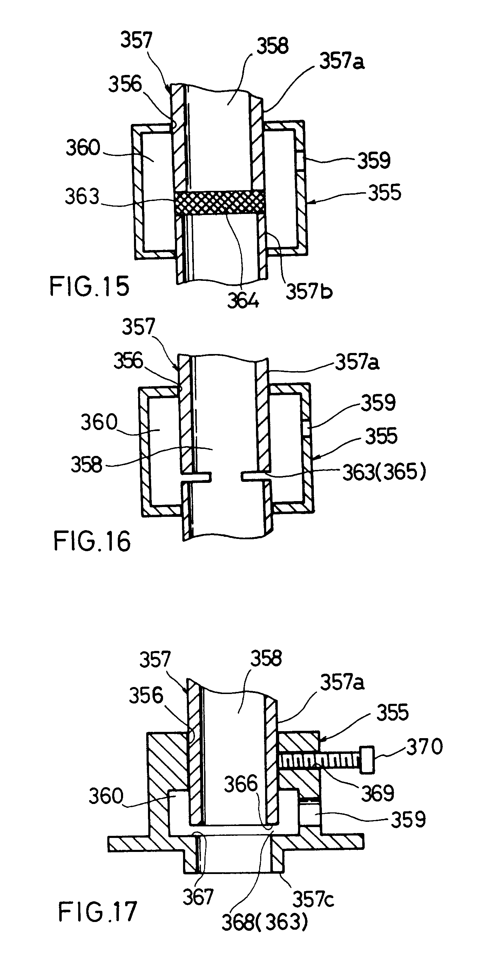

The gas conducting passage 363 is, as shown in Fig. 15, allowed to have the upper transport pipe 357a and the lower transport pipe 357b which are divided connected to each other by the permeable material such as net, punching metal and the like, or, as shown in Fig. 16, to be formed of notches 365 of adequate peripheral length instead of such a multiplicity of small holes as shown in Fig. 13, or, as shown in Fig. 17, to be replaced by slits 368 which are made between the lower end margin of the transport pipe 357 being inserted into the separator 355 and the upper opening margin 367 of the material outlet of the separator 355, other proper change in design thereof being also accepted.

In the case of such a construction as shown in Fig. 17, it is more recommendable that a structure in which a bolt 370 is inserted into a bolt hole 369 made in the outer wall of the separator 355, and supports the side part of the transport pipe 357 permits the transport pipe 357 to be vertically moved, thereby changing the flow sectional area of the slit 368 (i.e. the gas conducting passage 363).

A position of forming the gas conducting passage 363, which may be optionally changeable, as shown in Fig. 13, is preferably located at a position being nearer to the upper-stream side from the lower end part 357c of the transport pipe 357 by the same length as the bore $D_1$ of the powdered or granular materials passage 358.

The bore of the powdered or granular materials passage 358 of the transport pipe 357 which is inserted into the separator 355 makes preferably the bore $D_1$ on the lower-stream side by identical or slightly larger to/than the bore $D_0$ on the upper-stream side ($D_1 \geqq D_0$) at the front and back parts of the gas conducting passage 363.

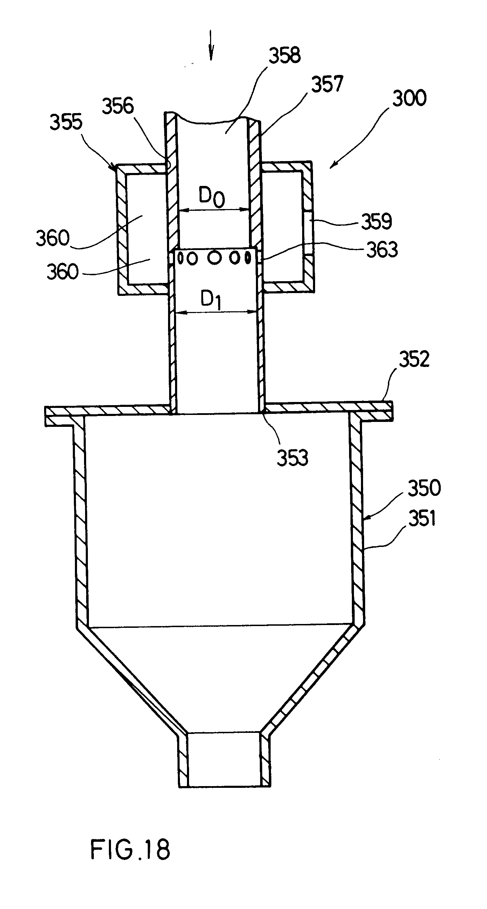

The separator 355 may be, as shown in Fig. 13, connected directly to the separator proper 350, or both the elements 355 and 350 may be integrally formed as one unit. A further alternative may be, as shown in Fig. 18, that the separator 355 being detached from the separator proper 350, the lower end part of the transport pipe 357 is constructed to be connected to the separator proper 350 (lid 352).

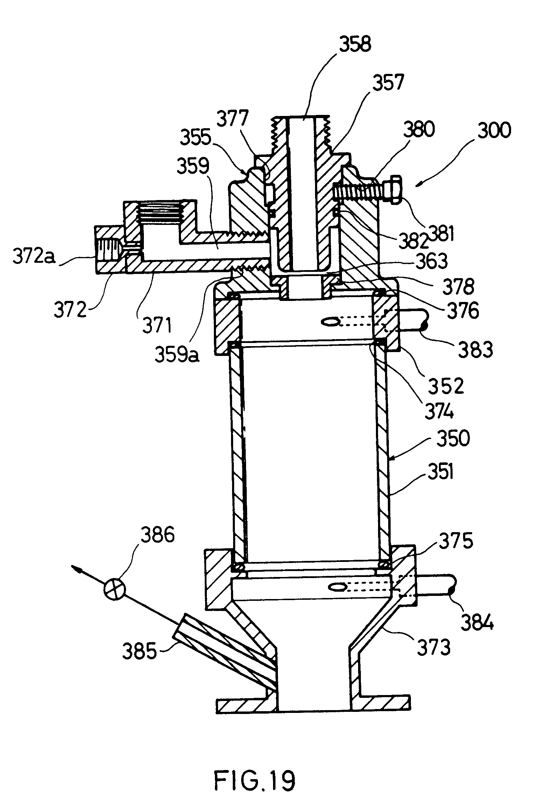

A description of the 9th embodiment is made in conjunction with Fig. 19 as follows:

The collector 300 comprises the collector proper 350 for collecting the powdered or granular materials and the separator 355 which is disposed on the upper-stream side of the collector 350. In this embodiment, the lid 352 and the bottom lid 373 are mounted by way of the packings 374 and 375 to the upper and lower parts respectively of the collector proper 350, and a formation integral with the main body 351 without mounting the lid 352 and the bottom lid 373 thereto may be also allowed. The separator 355 is fixed by way of the packing 376 to the lid 352.

The separator 355, approximately cylindrical, has the transport pipe inserting hole 377 located at its center. The short transport pipe 378, partially constituting the transport pipe, is fitted into the lower part of the transport pipe inserting hole 377, the transport pipe 357 which is constructed to form the slid-shaped gas conducting passage 363 between the upper face of the short transport pipe and it is inserted into the transport pipe inserting hole 377, and the side part of the transport pipe 357 is fixed by a bolt 381 which is inserted into the bolt inserting hole 380 formed in the upper face of the separator 355. The transport pipe 357 and the short transport pipe 378 communicate with the inside of the collector 350. 382 is the packing.

The mounting part of the exhaust hole 359a is provided in the outer wall of the separator 355, the exhaust pipe 371 having the exhaust hole 359 is connected to the mounting part of the exhaust hole 359a, and the gas supply pipe 372 for supplying the gas for cleaning the gas conducting passage 363 to the exhaust pipe 371. An intermittent or continuous injection-supply of the gas such as the air and the inactive nitrogen from the injection hole of the gas 372a of the gas supply pipe 372 permits the gas conducting passage 363 to be cleaned, and, when the cleaning is not performed, the separated gas or dust is discharged from the top end of the exhaust hole 359 to the outside of the separator 355.

The gas supply pipe is provided on the collector proper 350, the gas from the gas supply pipe cleans the inside of the collector proper 350, and the exhaust gas is discharged from the exhaust hole 359 of the collector 355 to the outside of the system. Namely, the upper gas supply pipe 383 and the lower gas supply pipe 384 are provided on the lid 352 of the collector proper 350 and the bottom lid 373 thereof respectively, the gas is supplied from the upper gas supply pipe 383 to the lower-stream side of the inside of the collector proper 350 in order to brush off the dust, and it, becoming the ascending gas, is discharged from the exhaust hole 359 to the outside of the system, while the gas from the lower gas supply pipe 384 is supplied from the lower part of the inside of the collector proper 350 to the upper part thereof so that it is discharged from the exhaust hole 359 to the outside of the system. In that case the gas is intermittently or continuously supplied. Only one of the upper gas supply pipe 383 and the lower gas supply pipe 384 can be also mounted.

In Fig. 19, when cleaning the gas conducting passage 363 and the collector proper 350, the exhaust pipe 385 mounted to the bottom lid 373 is opened by way of the valve 386, thereby issuing the back pressure gas, while when the cleaning is not performed, the exhaust pipe 385 is closed by way of the valve 386.

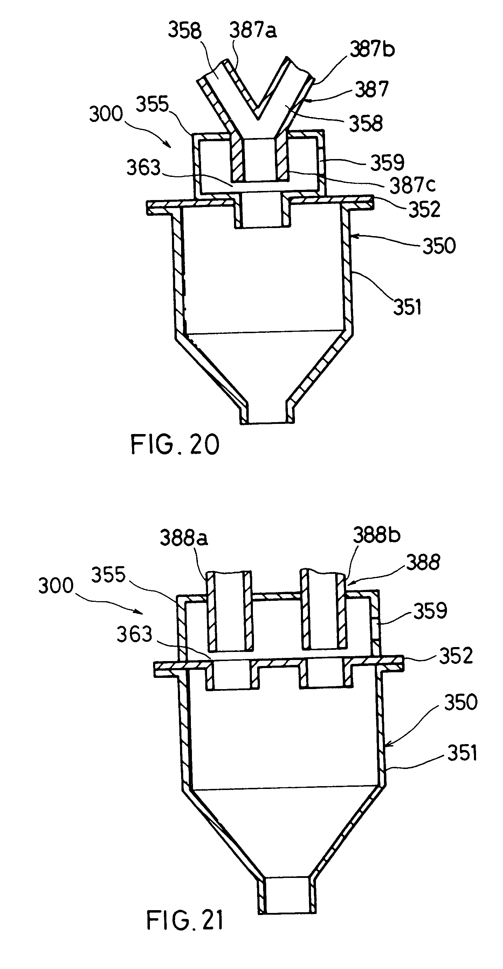

The transport pipe which is inserted into the separator 355 is, as shown in Figs. 20 and 21, formed, and the powdered or granular materials can be supplied from over two units of the transport pipes. The transport pipe of Fig. 20, Y-shaped, makes the branch pipes 387a and 387b located ont the upper-stream side join one unit of the transport pipe 387c at the lower place, and the transport pipe 388 of Fig. 21 consists of over two units of transport pipes 388a, 388b.... (e.g. two unit of pipes in the drawing), the proper change in the design thereof being also allowed.

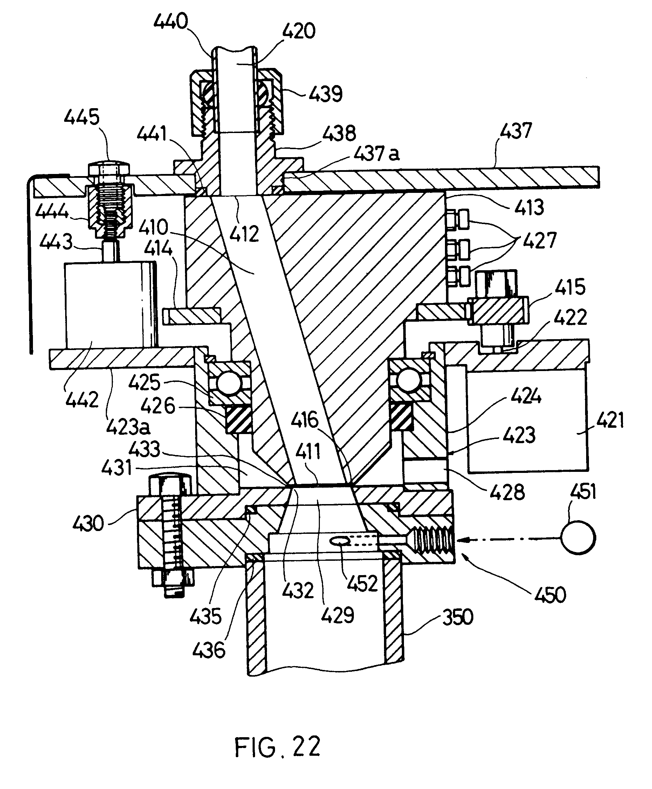

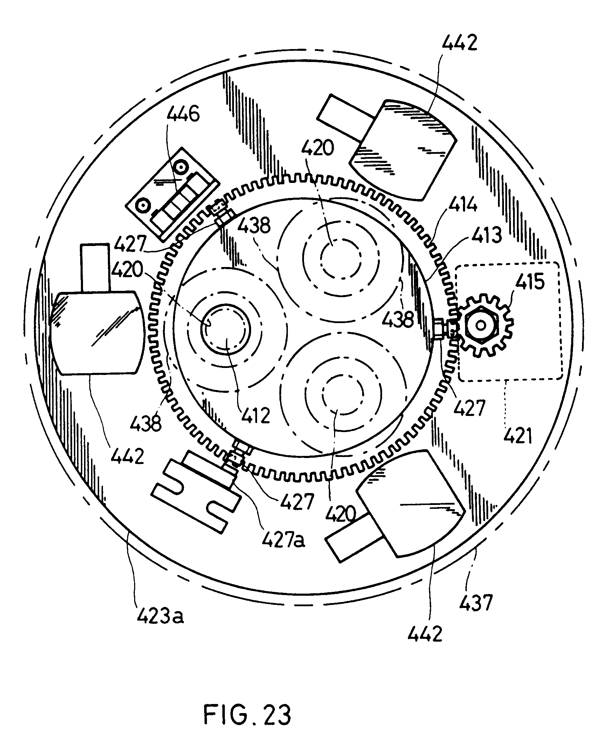

Figs. 22 and 23 illustrate the 10th embodiment. This embodiment comprises one unit of rotatable transport pipe 410, and a plurality of material select passages 420 capable of communicating with the transport pipe 410 (e.g. 3 units are specified for example purpose in the embodiment, any option being allowed.) Its characteristics lie in the arrangement in which the transport pipe 410 is rotated to communicate with the fixed material select passage 420, thereby making automatically a selective change-over of the material select passage 420.

Namely, as shown in Fig. 22, the transport pipe 410, being inclined, has the lower end discharge port 411 provided at its rotational center position, and a rotation of the transport pipe 410 enables a positional change of the upper end supply port to be made toward the circular locus.

In this embodiment, as a means of rotating the transport pipe 410, a large gear 414 is fixed to the body part 413 of the transport pipe 410, and a small gear 415 in mesh with the large gear 414 is provided. A motor 421 whose drive shaft 422 is connected to the small gear 415 is provided, whereby a drive of the motor 421 causes the transport pipe 410 to be rotated by way of the large gear 414, and the small gear 415.

A bearing 425 is interposed between the lower part of the body 413 of the transport pipe 410 and the side wall 424 of the separator 423. The rotating means of the transport pipe 410 is not always limited to the afore-mentioned gear mechanism, a belt mechanism and the like being allowed.

The positional detecting sensors 427 and 427a are constructed to position the rotational position of the transport pipe 410 every the material select passage 420,... Namely, the positional detecting sensors 427 and 427a detect the predetermined position of rotational angle of the transport pipe 410, thereby connecting the transport pipe 410 to communicate properly with the desired one of a plurality of material select passages 420. 446 is a sensor for confirming a state of separating the transport pipe 410 and the selector plate 437 from each other.

The separator 423 comprises the side wall 424 in the portion of which the exhaust hole 428 is made, and the bottom plate 430 on which the material introducing passage 429 is formed, and the part surrounded by the side wall 424 and the bottom plate 430 is defined as a void chamber 431 for separating the material, the transporting gas, and the dust from one another. The discharge port 411 of the transport pipe 410 faces the inside of void chamber 431, and an annular and small slit 433 is formed between the lower end peripheral margin 416 of the transport pipe 411 and the upper end peripheral margin 432 of the material introducing passage 429.

426, 435, and 436 are sealing members.

A plurality of material select passages 420..- (e.g. 3 units in this embodiment) are provided to be spaced equally on the selector plate 437.

The material select passages comprise the connecting transport pipe 438 connected to communicate with the selector plate 437, and the transport pipe 440 fixed to the connecting transport pipe 438 by the fastening member 439 such as the nuts. The sealing material 441 is interposed between the communicating hole 437a of the connecting transport pipe 438 of the selector plate 437 and the connecting transport pipe 438.

The piston rod 443 of the fluid pressure cylinder 442 fixed to the horizontal plate 423a located at the one and upper side 423 is fixed by way of the adjusting member 444 to the selector plate 437 by the fastening member 445 such as the nuts. When rotating the transport pipe 410 to change over the material select passage 420, the piston rod 443, whose work is started by an actuation of the fluid pressure cylinder 442, causes the selector plate 437 to be moved up to separate the selector plate 437 from the transport pipe 410, and after positioning the transport pipe 410 to the desired material select passage 420, the selector plate is by way of the piston rod 443 moved down, thereby connecting the transport pipe 410 to communicate with the desired material select passage 420. An adjustment of a height of pushing up the selector plate 437 is performed by adjusting a positional height of moving up the adjusting member 444. The change-over means of the selector plate 437 is not always limited to the afore-mentioned construction, a proper change in design thereof being allowed.

The apparatus according to this embodiment has a self-cleaning mechanism 450 provided between the bottom plate 430 and the collector proper 350, and the self-cleaning mechanism 450, being actuated during the running or prior to the change-over of the material, is designed to supply the gas from the source of pneumatic force 451 from the injection hole 452 to the inlet side of the collector 350.

An injection of the gas gives rise to the cyclone action, and its centrifugal force permits the material and dust adhering to the collector proper to be separated from the collector proper. Namely, while the material falls down to the inside of the collector 350, the gas and dust used for self-cleaning are discharged by way of the annular slit 433 from the exhaust hole 428.

In the 10th embodiment, such a self-cleaning mechanism as shown in Fig. 19 may be designed.

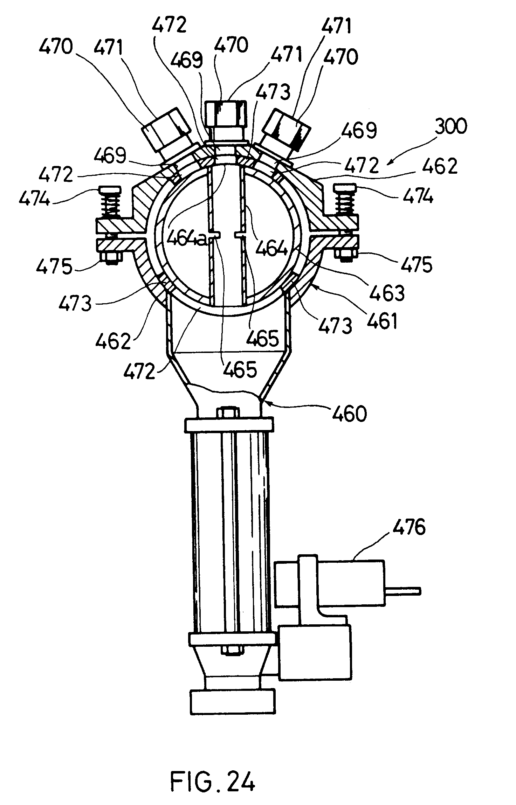

As the construction of changing over the transport pipe to multiple directions, in addition to the aforementioned embodiment, various kinds of designs can be thought as shown in Figs. 24-27, other constructions being able to be adopted.

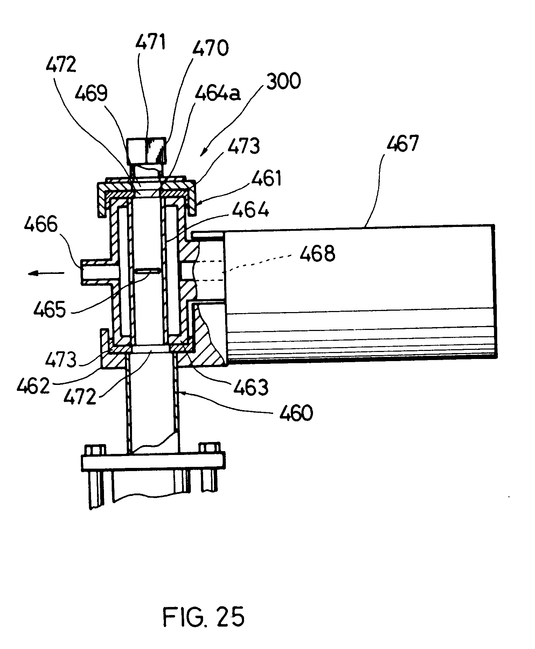

A description of Figs. 24 and 25 illustrating the 11th embodiment is made as follows: The collector 300 comprises the collector proper 460 and the separator 461 which is disposed on the upperstream side of the collector proper 460. In the separator 461 a casing 462 and a disc-shaped rotor 463 which is rotated to and for in the casing 462 are formed, the transport pipe 464 acting as the transport passage pernetrates the diametral direction of the rotor 463, and the material inlet 464a and the gas conducting passage 465 are formed on the upper and middle parts respectively of the transport pipe 464. The gas conducting passage 465 communicates with the exhaust hole 466 made in the outer wall of the rotor 463. As shown in Fig. 25, the rotor 463 is connected to the drive shaft 468 of the motor 467, and a drive of the motor 467 enables the rotor 463 to be automatically rotated. Instead of the motor 467, it is possible that a manual operation of the lever handle (not shown) connected to the rotor 463 rotates to and for the rotor 463 in a manual manner.

A plurality of material conducting passages 469...are formed on the external peripheral surface of the casing 462 with the predetermined intervals left, the connecting transport pipe 470 through which the powdered or granular materials passage 471 is formed is connected to communicate with the outside of each of the material conducting passages 469. A seal 473 having at least a part opposite to each of the material conducting holes 469 and the material communicating hole 472 equal to an amount of rotational distance between 1st material conducting hole 469 and the last one is interposed between the casing 462 and the rotor 463.

In such a state as shown in Figs. 24 and 25, a drive of the motor 467 or the lever handle (not shown) in a fixed direction or positive and negative directions causes the transport pipe 464 to communicate with other different material conducting hole 469 of the connecting transport pipe 470, thereby making it possible to change over the transport pipe in a different mode.

474 is a bolt, 475 is a nut, and 476 is a known level instrument for detecting the filling level of the powdered or granular materials.

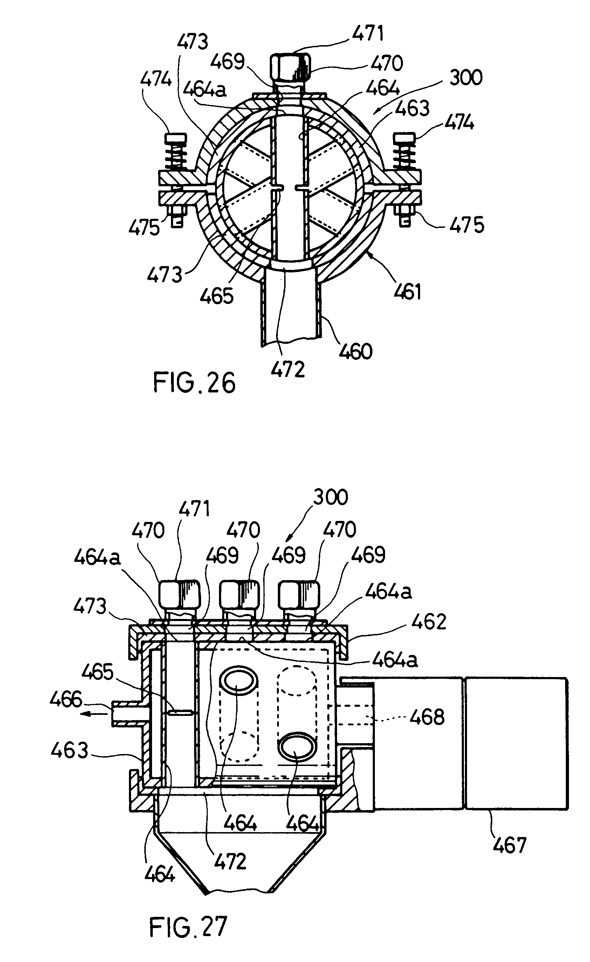

A description of Figs. 26 and 27 illustrating the 12th embodiment is made as follows: This arrangement is an modified example of the 11th embodiment (Figs. 24 and 25), in which the external peripheral surface side of the rotor 463 is extended, a plurality of transport pipes 464 (e.g. 3 units in the drawing, 2 units or over 4 units being accepted) are provided such that they are spaced equally at the diametral position of the external peripheral surface of the rotor 463, their material inlet 464a being dislocated in a circumferential direction, and a rotation of the rotor 463, made a fixed angle by a fixed angle, causes the transport pipe 464 to communicate with the powdered or granular passage 471 of the connecting transport pipe 470, whereby a change-over to a different transport pipe can be made. The same symbols of Figs. 26 and 27 as those of Figs. 24 and 25 stand for the same constructions.

The apparatus according to the 8th - 12th embodiments does not employ the conventional arrangement in which the filter is used for the separate collection, and for this reason, while the material falls to be collected in the collector proper under the state where it is separated from the transporting gas and the dust by means of the air flow of the transporting gas and the inertia force of the material, and as a result of discharge of the dust together with the transporting gas from the gas conducting passage, a smooth separated collection can be executed without a clogging of the collector proper and the separator and a residual adhering of the material thereto.

Even if a clogging with the dust or an adhering residue of the material takes place in the gas conducting passage, they can be easily brushed off by means of the air flow of the transporting gas and the inertia force caused by the dead load of the material. In addition, the large-sized apparatus such as the cyclone unit, which has been conventionally needed, becoming unnecessary, the simple construction meets the requirement in which the necessity only lies in forming the annular slit in the void chamber, the apparatus, as a whole, can be miniaturized, and the installing space is markedly reduced.

As the method of pneumatic-transporting the material, a limit to such suction and pressure-feed types as shown by the embodiments is not always absolute, a proper change in design toward other modes being able to be put in practice.

**Claims**

1.  An apparatus transporting powdered or granular materials by pneumatic force with a transport pipe,
    comprising;
    a storage vessel (1);
    a transport pipe (20) having an inside diameter 2 to 6 times the maximum length of the particle size of the powdered or granular materials (M) to be transported, which communicates with a material outlet of the storage vessel (1);
    a pneumatic power source (100) for transporting the powdered or granular materials (M) from the storage vessel (1) by way of the transport pipe (20) to a destination;
    floating means (200) for causing the powdered or granular materials (M) to float at an inlet (21) of the transport pipe (20) or in the vicinity of the inlet (21) thereof;
    and a collector (300), provided at an outlet of the transport pipe (20), which collects the powdered or granular materials (M) and transporting gas in a separate manner;
    **characterized in that** the floating means (200) comprises a feeder main body (220) connected to the storage vessel (1), said body (220) having a material housing chamber (223), formed into a thin-layer-shaped space, which is filled with the powdered or granular materials (M) in a thin-layer-shaped manner, the transport pipe (20) being connected to communicate with a material outlet (224) on one side of the material housing chamber (223), and a nozzle (115) communicating with said power source (100) is connected to communicate with the other side of the material housing chamber (223), opposite to the transport pipe (20).

2. An apparatus as claimed in Claim 1, wherein the feeder main body (220) is characterized by that the inlet of the material housing chamber (223) is inclined to the outlet.

3. An apparatus as claimed in Claim 1 or 2, wherein an adjusting member (20d) for regulating the flow of the material is disposed near the material outlet (224) of the material housing chamber (223) of the feeder main body (220).

4. An apparatus as claimed in Claim 3, wherein the nozzle (115) is disposed in such a manner as to be freely detachable and movable on the feeder (30).

5. An apparatus as claimed in Claim 1, wherein the collector (300) has at least a part of its housing chamber side wall (310) of the collector (300) equipped with a first electrode (310b), a second electrode (324) opposite to the first electrode (310b) is provided in the housing chamber (313) in the housing chamber side wall (310), or one unit of a plurality of units of electrodes (310e), (310f), differently opposite to each other, are formed to be overlaid upon each other on the housing chamber side wall (310) with an insulated part (310d) interposed between them, the two pairs of electrodes (310b), (324); (310e), (310f) are connected to a detecting part (325), and a change in electrostatic capacity between the two pairs of electrodes (310b), (324); (310e), (310f), caused by filling with the powdered or granular materials, is detected by the detecting part (325), whereby a level of the powdered or granular materials in the housing chamber (313) of the collector (300) can be detected.

6. An apparatus as claimed in Claim 1 or 2, wherein the collector (300) comprises a collector main body (350) which collects the powdered or granular materials and a separator (355) which separates the powdered or granular materials and transporting gas from each other, the separator (355) is disposed on the upstream side with respect to the collector main body (350), a transport pipe (357) having a powdered or granular materials passage (358) is inserted into the separator (355), a gas conducting passage (363) which takes out the transporting gas and dust is provided in the transport pipe (357), an exhaust hole (359) which discharges the separated gas and dust to the outside of the separator (355) is formed on the outer wall of the separator (355), and the inside diameter of the powdered or granular materials passage (358) of the transport pipe (357) inserted into the separator (355) is slightly larger at the downstream side as compared with the upstream side, or preferably identical on both sides.

7. An apparatus as claimed in Claim 3, wherein the collector (300) comprises a collector main body (350) which collects the powdered or granular materials and a separator (355) which separates the powdered or granular materials and transporting gas from each other, the separator (355) is disposed on the upstream side with respect to the collector main body (350), a transport pipe (357) having a powdered or granular materials passage (358) is inserted into the separator (355), a gas conducting passage (363) which takes out the transporting gas and dust is provided in the transport pipe (357), an exhaust hole (359) which discharges the separated gas and dust to the outside of the separator (355) is formed on the outer wall of the separator (355), and the inside diameter of the powdered or granular materials passage (358) of the transport pipe (357) inserted into the separator (355) is slightly larger at the downstream side as compared with the upstream side, or preferably identical on both sides.

8. An apparatus as claimed in Claim 4, wherein the collector (300) comprises a collector main body (350) which collects the powdered or granular materials and a separator (355) which separates the powdered or granular materials and transporting gas from each other, the separator (355) is disposed on the upstream side with respect to the collector main body (350), a transport pipe (357) having a powdered or granular materials passage (358) is inserted into the separator (355), a gas conducting passage (363) which takes out the transporting gas and dust is provided in the transport pipe (357), an exhaust hole (359) which discharges the separated gas and dust to the outside of the separator (355) is formed on the outer wall of the separator (355), and the inside diameter of the powdered or granular materials passage (358) of the transport pipe (357) inserted into the separator (355) is slightly larger at the downstream side as compared with the upstream side, or preferably identical on both sides.

9. An apparatus as claimed in Claim 7 or 8, wherein the outer wall of the separator (355) is made of a permeable material through which transporting gas or duct may pass.

10. An apparatus as claimed in Claim 6, wherein the gas conducting passage (363) is constituted by a slit (368) which is formed between a lower end margin (366) of the transport pipe (357) which is inserted into the separator (355) and an upper end margin (367) of the material output of the separator (355), and the slit (368) has its flow sectional area fluctuated in response to a vertical movement of the transport pipe (357).

11. An apparatus as claimed in Claim 7 or 8, wherein the gas conducting passage (363) is constituted by a slit (368) which is formed between a lower end margin (366) of the transport pipe (357) which is inserted into the separator (355) and an upper end margin (367) of the material output of the separator (355), and the slit (368) has its flow sectional area fluctuated in response to a vertical movement of the transport pipe (357).

12. An apparatus as claimed in Claim 1, wherein the collector (300) comprises a collector main body (350) for collecting the powdered or granular materials and a separator (355) for separating the powdered or granular materials and transporting gas from each other, the separator (355) is disposed on the upstream side with respect to the collector (300), and a transport pipe (357) having a powdered or granular material passage (358) is inserted into the separator (355), a gas conducting passage (363) for taking out the transporting gas and dust is provided in the transport pipe (357), and an exhaust port mounting part (359a) is formed in the outer wall of the separator (355), while an exhaust pipe (371) having an exhaust hole (359) is connected to the exhaust hole mounting part (359a) of the separator (355), and a gas supply pipe (372) for supplying gas to clean the gas conducting passage (363) is connected to the exhaust pipe (371).

13. An apparatus as claimed in Claim 11, wherein the collector (300) comprises a collector main body (350) for collecting the powdered or granular materials and a separator (355) for separating the powdered or granular materials and transporting gas from each other, the separator (355) is disposed on the upstream side with respect to the collector (300), and a transport pipe (357) having a powdered or granular material passage (358) is inserted into the separator (355), a gas conducting passage (363) for taking out the transporting gas and dust is provided in the transport pipe (357), and an exhaust port mounting part (359a) is formed in the outer wall of the separator (355), while an exhaust pipe (371) having an exhaust hole (359) is connected to the exhaust hole mounting part (359a) of the separator (355), and a gas supply pipe (372) for supplying gas to clean the gas conducting passage (363) is connected to the exhaust pipe (371).

14. An apparatus as claimed in Claim 12 or 13, wherein gas supply pipes (383), (384) for supplying gas to clean the inside of the collector main body (350) are provided in the collector main body (350), and the gas which is supplied from the gas supply pipes (383), (384) is discharged from the separator (355) or the exhaust hole provided in the collector main body (355).

**Patentansprüche**

1. Vorrichtung zum Fördern von pulverförmigen oder granulierten/körnigen Materialien mittels pneumatischer Kraft mit einer Förder-Rohrleitung mit:
   einem Speicherbehälter (1) :
   einer Förder-Rohrleitung (20), die einen Innendurchmesser hat, der das Zwei- bis Sechsfache der Maximallänge der Partikelgröße der pulverförmigen oder körnigen Materialien (M) beträgt, die zu fördern sind, und die mit einem Materialausgang des Speicherbehälters (1) verbunden ist;
   einer Quelle (100) für pneumatische Leistung zum Fördern der pulverförmigen oder körnigen Materialien (M) aus dem Speicherbehälter (1) durch die Förder-Rohrleitung (20) hindurch an einen Bestimmungsort;
   eine Schwimmeinrichtung (200), mit der zu bewirken ist, daß die pulverförmigen oder körnigen Materialien (M) zu einem Einlaß (21) der Förder-Rohrleitung (20) oder in die Nähe dieses Einlasses (21) derselben schwimmen; und
   einem Sammler (300), der am Auslaß der Förder-Rohrleitung (20) vorgesehen ist und die pulverförmigen oder körnigen Materialien (M) und das Transportgas in getrennter Weise sammelt;

gekennzeichnet dadurch,

daß die Schwimmeinrichtung (200) einen Hauptzufuhrkörper (220) hat, der mit dem Speicherbehälter (1) verbunden ist, wobei dieser Körper (220) eine Materialgehäusekammer (223) aufweist, die zu einem dünnschichtförmigen Raum ausgebildet ist, der mit den pulverförmigen oder körnigen Materialien (M) in Dünnschichtweise gefüllt ist, wobei die Förder-Rohrleitung (20) so angeschlossen ist, daß sie Verbindung mit einem Materialauslaß (224) auf der einen Seite der Materialgehäusekammer (223) hat, und eine mit dieser Quelle (100) für Leistung in Verbindung stehenden Düse (115) hat, die mit der anderen Seite der Materialgehäusekammer (223), der Förder-Rohrleitung (20) gegenüberliegend, verbunden ist.

2. Vorrichtung nach Anspruch 1,
bei der der Hauptzufuhrkörper (220) gekennzeichnet ist dadurch, daß der Einlaß der Materialgehäusekammer (23) zum Auslaß hin geneigt ist.

3. Vorrichtung nach Anspruch 1 oder 2,
bei der ein Justierteil (20d) für das Regulieren des Flusses des Materials nahe dem Materialauslaß (224) der Materialgehäusekammer (223) des Hauptzufuhrkörpers (220) angeordnet ist.

4. Vorrichtung nach Anspruch 3,
bei der die Düse (115) in einer solchen Weise angeordnet ist, daß sie frei abnehmbar und auf dem Zufuhrteil (30) bewegbar ist.

5. Vorrichtung nach Anspruch 1,
bei der der Sammler (300) wenigstens einen solchen Anteil seiner Gehäusekammerseitenwand hat, der ausgerüstet ist mit einer ersten Elektrode (310b), eine zweite Elektrode (324), der ersten Elektrode (310b) gegenüberliegend, in der Gehäusekammer (313) in der Gehäusekammerseitenwand (310) vorgesehen ist oder eine Einheit einer Vielzahl von Einheiten von Elektroden (310e, 310f), die, einander verschieden gegenüberliegend, derart ausgebildet sind, daß sie auf der Gehäuseseitenwand (310) mit einem zwischen ihnen befindlichen isolierenden Teil (310d) übereinander liegend sind, wobei die zwei Paare Elektroden (310b,324;310e,310f) mit einem Detektorteil (325) verbunden sind und eine Veränderung der elektrostatischen Kapazität zwischen den zwei Paaren der Elektroden (310b,324; 310e,310f), verursacht durch Anfüllung mit pulverförmigen oder körnigen Materialien, durch das Detektorteil (325) festgestellt wird, womit ein Füllstand der pulverförmigen oder körnigen Materialien in der Gehäusekammer (310) des Sammlers (300) festgestellt werden kann.

6. Vorrichtung nach Anspruch 1 oder 2,
bei der der Sammler (300) einen Sammlerhauptkörper (350), der die pulverförmigen oder körnigen Materialien sammelt, und einen Separator (355) hat, der die pulverförmigen oder körnigen Materialien und das Transportgas voneinander trennt, wobei der Separator (355) auf der stromaufwärts liegenden Seite, bezogen auf den Sammlerhauptkörper (350), angeordnet ist, bei der in den Separator (355) eine Förder-Rohrleitung (357) mit einem Durchlaß (358) für pulverförmige oder körnige Materialien eingeführt ist, bei der ein gasführender Durchlaß (363) in der Förder-Rohrleitung (357) vorgesehen ist, der das Transportgas und Staub herausnimmt, bei der eine Auslaßöffnung (357) in der äußeren Wand des Separators (355) ausgebildet ist, mit der das abgetrennte Gas und der abgetrennte Staub aus dem Separator (355) nach außen abgegeben werden, und bei der der Innendurchmesser des für die pulverförmigen oder körnigen Materialien vorgesehenen Durchlasses (358) der in den Separator (355) eingeführten Förder-Rohrleitung (357) auf der stromabwärts liegenden Seite ein wenig größer ist im Vergleich zur stromaufwärts liegenden Seite oder vorzugsweise für beide Seiten identisch ist.

7. Vorrichtung nach Anspruch 3,
bei der der Sammler (300) einen Sammlerhauptkörper (350), der die pulverförmigen oder körnigen Materialien sammelt, und einen Separator (355) hat, der die pulverförmigen oder körnigen Materialien und Transportgas voneinander trennt, wobei der Separator (355), bezogen auf den Sammlerhauptkörper (350), auf der stromaufwärts liegenden Seite angeordnet ist, bei der eine Förder-Rohrleitung (357), die einen Durchlaß (358) für pulverförmige oder körnige Materialien hat, in den Separator (355) eingeführt ist, bei der ein gasführender Durchlaß (363) in der Förder-Rohrleitung (357) vorgesehen ist und dieser Durchlaß das Transportgas und Staub herausnimmt, bei der eine Auslaßöffnung (359), die das abgetrennte Gas und den Staub, bezogen auf den Separator (355), nach außen abläßt, an der äußeren Wand des Separators (355) ausgebildet ist, und bei der der Innendurchmesser des für die pulverförmigen oder körnigen Materialien vorgesehenen Durchlasses (358) der Förder-Rohrleitung (357), die in den Separator (355) eingeführt ist, auf der stromabwärts liegenden Seite ein wenig größer ist verglichen mit der Stromaufwärts-Seite oder vorzugsweise auf beiden Seiten identisch ist.

8. Vorrichtung nach Anspruch 4,
bei der der Sammler (300) einen Sammlerhauptkörper (350), der pulverförmige oder körnige Materialien sammelt, und einen Separator (355) hat, der die pulverförmigen oder körnigen Materialien und Transportgas voneinander trennt, wobei der Separator (355), bezogen auf den Sammlerhauptkörper (350), auf der stromaufwärts liegenden Seite angeordnet ist, bei der eine Förder-Rohrleitung (357), die eine für pulverförmige oder körnige Materialien vorgesehenen Durchlaß (358) hat, in den Separator (355) eingeführt ist, bei der ein gasführender Durchlaß (363), der das Transportgas und Staub herausnimmt, in der Förder-Rohrleitung (357) vorgesehen ist, bei der eine Auslaßöffnung (359), die, bezogen auf den Separator (355), abgetrenntes Gas und abgetrennten Staub nach außen herausläßt, an der äußeren Wand des Separators (355) ausgebildet ist und bei der der Innendurchmesser des für die pulverförmigen oder körnigen Materialien vorgesehenen Durchlasses (358) der Förder-Rohrleitung (357), die in den Separator (355) eingeführt ist, auf der stromabwärts liegenden Seite etwas größer ist als auf der Stromaufwärts-Seite oder vorzugsweise auf beiden Seiten identisch ist.

9. Vorrichtung nach Anspruch 7 oder 8,
bei der die Außenwand des Separators (355) aus permeablem Material besteht, durch das Transportgas oder Staub hindurch treten kann.

10. Vorrichtung nach Anspruch 6,
bei der der gasführende Durchlaß (363) ein Schlitz (368) ist, der zwischen einem unteren Endrand (366) der Förder-Rohrleitung (357), die in den Separator (355) eingeführt ist, und einem oberen Endrand (367) des Materialausgangs des Separators (355) ausgebildet ist, und bei der der Schlitz (368) eine Fließquerschnittsfläche hat, die abhängig von einer Vertikalbewegung der Förder-Rohrleitung (357) fluktuiert.

11. Vorrichtung nach Anspruch 7 oder 8,
bei der der gasführende Durchlaß (363) ein Schlitz (368) ist, der zwischen einem unteren Endrand (366) der Förder-Rohrleitung (357), die in den Separator (355) eingeführt ist, und einem oberen Endrand (367) des Materialausgangs des Separators (355) ausgebildet ist, und bei der der Schlitz (368) eine Fließquerschnittsfläche hat, die abhängig von einer Vertikalbewegung der Förder-Rohrleitung (357) fluktuiert.

12. Vorrichtung nach Anspruch 1,
bei der der Sammler (300) einen Sammlerhauptkörper (350) für das Sammeln pulverförmiger oder körniger Materialien und einen Separator (355) für das Trennen der pulverförmigen oder körnigen Materialien und des Transportgases voneinander hat, wobei der Separator (355), bezogen auf den Sammler (300), auf der stromaufwärts liegenden Seite angeordnet ist, und bei der eine Förder-Rohrleitung (357), die einen für pulverförmiges oder körniges Material vorgesehenen Durchlaß (358) hat, in den Separator (355) eingeführt ist, bei der ein gasführender Durchlaß (363) für das Herausnehmen des Transportgases und von Staub in der Förder-Rohrleitung (357) vorgesehen ist, und bei der ein Befestigungsteil (359a) für eine Auslaßöffnung in der äußeren Wand des Separators (355) ausgebildet ist, wobei eine Auslaßleitung (357) mit einer Auslaßöffnung (359) mit dem Befestigungsteil (359a) der Auslaßöffnung des Separators (355) verbunden ist und eine Gas-Zufuhrrohrleitung (372) für die Zuführung von Gas zum Reinigen des gasförmigen Durchganges (363) mit der Auslaßleitung (371) verbunden ist.

13. Vorrichtung nach Anspruch 11,
bei der der Sammler (300) einen Sammlerhauptkörper (350) zum Sammeln pulverförmiger oder körniger Materialien und einen Separator (355) zum Trennen der pulverförmigen oder körnigen Materialien und des Transportgases voneinander hat, wobei der Separator (355), bezogen auf den Sammler (300) auf der stromaufwärts liegenden Seite angeordnet ist und bei der eine Förder-Rohrleitung (357), die einen Durchlaß (358) für pulverförmiges oder körniges Material hat, in den Separator (355) eingeführt ist, bei der ein gasführender Durchlaß (363) für das Herausnehmen von Transportgas und Staub in der Förder-Rohrleitung (357) vorgesehen ist, und bei der ein Befestigungsteil (359a) für eine Auslaßöffnung in der äußeren Wand des Separators (355) ausgebildet ist, wobei eine Auslaßleitung (371) mit einer Auslaßöffnung (359) mit dem Befestigungsteil (359a) der Auslaßöffnung des Separators (355) verbunden ist und eine Gaszufuhrleitung (372) zur Zuführung von Gas zum Reinigen des gasförmigen Durchlasses (363) mit der Auslaßleitung (371) verbunden ist.

**14.** Vorrichtung nach einem der Ansprüche 12 oder 13,
bei der Gaszufürungsleitungen (383,384) für die Zuführung von Gas zum Reinigen der Innenseite des Sammlerhauptkörpers (350) in dem Sammlerhauptkörper (350) vorgesehen sind und das mit den Gaszuführleitungen (383,384) zugeführte Gas aus dem Separator (355) oder der Auslaßöffnung herausgelassen wird, die in dem Sammlerhauptkörper (355) vorgesehen ist.

## Revendications

**1.** Appareil pour transporter des matériaux en poudre ou en grains par la force pneumatique comportant un tuyau de transport, comprenant :

un récipient de stockage (1) ;

un tuyau de transport (20) ayant un diamètre intérieur de 2 à 6 fois la longueur maximale de la taille des particules des matériaux en poudre ou en grains (M) qui doivent être transportés, lequel communique avec un orifice de sortie des matériaux du récipient de stockage (1) ;

une source d'alimentation pneumatique (100) pour transporter les matériaux en poudre ou en grains (M) à partir du récipient de stockage (1) à l'aide du tuyau de transport (20) à une destination ;

des moyens de flottement (200) pour amener les matériaux en poudre ou en grains (M) à flotter à un orifice d'entrée (21) du tuyau de transport (20) ou au voisinage de l'orifice d'entrée (21) du tuyau de transport ;

et un collecteur (300) prévu à un orifice de sortie du tuyau de transport (20), qui collecte de manière séparée les matériaux en poudre ou en grains (M) et le gaz de transport ;

caractérisé en ce que les moyens de flottement (200) comprennent un corps principal du dispositif d'alimentation (220) raccordé au récipient de stockage (1), le corps (220) ayant une chambre de logement des matériaux (223), formée dans un espace en forme de couches minces, qui est rempli avec les matériaux en poudre ou en grains (M) de manière à former des couches minces, le tuyau de transport (20) étant raccordé pour communiquer avec un orifice de sortie de matériaux (224) sur un côté de la chambre de logement des matériaux (223), et une buse (115) communiquant avec la source d'alimentation (100) est raccordée pour communiquer avec l'autre côté de la chambre de logement des matériaux (223), opposée au tuyau de transport (20).

**2.** Appareil selon la revendication 1, dans lequel le corps principal du dispositif d'alimentation (220) est caractérisé en ce que l'orifice d'entrée de la chambre de logement des matériaux (223) est incliné vers l'orifice de sortie.

**3.** Appareil selon la revendication 1 ou 2, dans lequel un élément d'ajustement (20d) pour régler l'écoulement du matériau est disposé près de l'orifice de sortie des matériaux (224) de la chambre de logement des matériaux (223) du corps principal du dispositif d'alimentation (220).

**4.** Appareil selon la revendication 3, dans lequel la buse (115) est disposée d'une manière telle à être librement enlevable et déplaçable sur le dispositif d'alimentation (30).

**5.** Appareil selon la revendication 1, dans lequel le collecteur (300) comporte au moins une partie de sa paroi latérale de chambre de logement (310) du collecteur (300) munie d'une première électrode (310b), une seconde électrode (324) opposée à la première électrode (310b) est prévue dans la chambre de logement (313) dans la paroi latérale de la chambre de logement (310), ou une unité d'une multitude d'unités des électrodes (310e), (310f), opposées différemment l'une à l'autre, sont formées pour reposer les unes sur les autres sur la paroi latérale de chambre de logement (310) avec une partie isolée (310d) interposée entre celles-ci, les deux paires des électrodes (310b), (324) ; (310e), (310f) sont connectées à une partie de détection (325), et un changement de la capacité électrostatique entre les deux paires des électrodes (310b), (324) ; (310e), (310f), provoqué par le remplissage avec les matériaux en poudre ou en grains, est détecté par la partie de détection (325), d'où il résulte qu'un niveau des matériaux en poudre ou en grains dans la chambre de logement (313) du collecteur (300) peut être détecté.

**6.** Appareil selon la revendication 1 ou 2, dans lequel le collecteur (300) comprend un corps principal de collecteur (350) qui collecte les matériaux en poudre ou en grains et un séparateur (355) qui sépare les matériaux en poudre ou en grains et le gaz de transport les uns des autres, le séparateur (355) est disposé sur le côté en amont par rapport au corps principal du collecteur (350), un tuyau de transport (357) ayant un passage des matériaux en poudre ou en grains (358) est inséré dans le séparateur (355), un passage de conduction de gaz (363) qui extrait le gaz de transport et la poussière est prévu dans le tuyau de transport (357), un trou d'évacuation (359) qui décharge le gaz et la poussière séparés à l'extérieur du séparateur (355) est formé sur la paroi extérieure du séparateur (355), et le diamètre intérieur du passage des matériaux en poudre ou en grains (358) du tuyau de transport (357) inséré dans le séparateur (355) est légèrement supérieur au côté aval comparé au côté amont, ou de préférence identique sur les deux côtés.

7. Appareil selon la revendication 3, dans lequel le collecteur (300) comprend un corps principal de collecteur (350) qui collecte les matériaux en poudre ou en grains et un séparateur (355) qui sépare les matériaux en poudre ou en grains et le gaz de transport les uns des autres, le séparateur (355) est disposé sur le côté amont par rapport au corps principal du collecteur (350), un tuyau de transport (357) ayant un passage des matériaux en poudre ou en grains (358) est inséré dans le séparateur (355), un passage de conduction de gaz (363) qui extrait le gaz de transport et la poussière est prévu dans le tuyau de transport (357), un trou d'évacuation (359) qui décharge le gaz et la poussière séparés à l'extérieur du séparateur (355) est formé sur la paroi extérieure du séparateur (355), et le diamètre intérieur du passage des matériaux en poudre ou en grains (358) du tuyau de transport (357) inséré dans le séparateur (355) est légèrement supérieur au côté aval comparé au côté amont, ou de préférence est identique sur les deux côtés.

8. Appareil selon la revendication 4, dans lequel le collecteur (300) comprend un corps principal de collecteur (350) qui collecte les matériaux en poudre ou en grains et un séparateur (355) qui sépare les uns des autres les matériaux en poudre ou en grains et le gaz de transport, le séparateur (355) est disposé sur le côté amont par rapport au corps principal du collecteur (350), un tuyau de transport (357) ayant un passage des matériaux en poudre ou en grains (358) est inséré dans le séparateur (355), un passage de conduction du gaz (363) qui extrait le gaz et la poussière de transport est prévu dans le tuyau de transport (357), un trou d'évacuation (359) qui décharge le gaz séparé et la poussière séparée à l'extérieur du séparateur (355) est formé sur la paroi extérieure du séparateur (355), et le diamètre intérieur du passage des matériaux en poudre ou en grains (358) du tuyau de transport (357) inséré dans le séparateur (355) est légèrement supérieur côté aval comparé au côté amont, ou de préférence identique sur les deux côtés.

9. Appareil selon la revendication 7 ou 8, dans lequel la paroi extérieure du séparateur (355) est constituée d'un matériau perméable à travers lequel le gaz de transport ou les poussières peuvent passer.

10. Appareil selon la revendication 6, dans lequel le passage de conduction de gaz (363) est constitué par une fente (368) qui est formée entre une bordure d'extrémité inférieure (366) du tuyau de transport (357) qui est inséré dans le séparateur (355) et une bordure d'extrémité supérieure (367) de la sortie de matériau du séparateur (355), et la fente (368) comporte sa largeur d'écoulement qui varie en réponse à un mouvement vertical du tuyau de transport (357).

11. Appareil selon la revendication 7 ou 8, dans lequel le passage de conduction de gaz (363) est constitué par une fente (368) qui est formée entre une bordure d'extrémité inférieure (366) du tuyau de transport (357) qui est inséré dans le séparateur (355) et une bordure d'extrémité supérieure (367) de la sortie du matériau du séparateur (355), et la fente (368) présente sa largeur d'écoulement qui fluctue en réponse à un mouvement vertical du tuyau de transport (357).

12. Appareil selon la revendication 1, dans lequel le collecteur (300) comprend un corps principal de collecteur (350) pour collecter les matériaux en poudre ou en grains et un séparateur (355) pour séparer les matériaux en poudre ou en grains et le gaz de transport les uns des autres, le séparateur (355) est disposé sur le côté amont par rapport au collecteur (300), et un tuyau de transport (357) comportant un passage des matériaux en poudre ou en grains (358) est inséré dans le séparateur (355), un passage de conduction de gaz (363) pour extraire le gaz de transport et la poussière est prévu dans le tuyau de transport (357), et une partie de montage d'orifice d'évacuation (359a) est formée dans la paroi extérieure du séparateur (355) tandis qu'un tuyau de transport (371) ayant un trou d'évacuation (359) est raccordé à la partie de montage de l'orifice d'évacuation (359a) du séparateur (355), et un tuyau d'alimentation en gaz (372) pour délivrer du gaz afin de nettoyer le passage de conduction de gaz (363) est raccordé au tuyau d'évacuation (371).

13. Appareil selon la revendication 11, dans lequel le collecteur (300) comprend un corps principal de collecteur (350) pour collecter les matériaux en poudre ou en grains et un séparateur (355) pour séparer les matériaux en poudre ou en grains et le gaz de transport les uns des autres, le séparateur (355) est disposé sur le côté amont par rapport au collecteur (300), et un tuyau de transport (357) comportant un passage des matériaux en poudre ou en grains (358) est inséré dans le séparateur (355), un passage de conduction de gaz (363) pour extraire le gaz de transport et la poussière est prévu dans le tuyau de transport (357) et une partie de montage d'orifice d'évacuation (359a) est formée dans la paroi extérieure du séparateur (355), tandis qu'un tuyau d'évacuation (371) ayant un trou d'évacuation (359) est raccordé à la partie de montage d'orifice d'évacuation (359a) du séparateur (355), et un tuyau d'alimentation en gaz (372) pour délivrer du gaz afin de nettoyer le passage de conduction de gaz (363) est raccordé au tuyau d'évacuation (371).

14. Appareil selon la revendication 12 ou 13, dans lequel les tuyaux d'alimentation en gaz (383, (384) pour délivrer du gaz afin de nettoyer l'intérieur du corps principal du collecteur (350) sont prévus dans le corps principal du collecteur (350), et le gaz qui est délivré à partir des tuyaux d'alimentation en gaz (383), (384) est déchargé à partir du séparateur (355) ou du trou d'évacuation prévu dans le corps principal du collecteur (355).

FIG. 1

FIG. 2

FIG. 3

FIG. 4

FIG. 5

FIG. 6

FIG. 7

FIG. 8

FIG. 9

FIG.10

FIG.11

310d    300

310e

323
326

325

326

326

323

FIG.12    317

310d
323
310d
310
310f
310d
323
310e
310d
310 f
310d

FIG.13

FIG.14

FIG.15

FIG.16

FIG.17

FIG.18

FIG.19

FIG. 20

FIG. 21

FIG. 22

FIG. 23

FIG. 24

FIG. 25

FIG.26

FIG.27